# EUROPEAN PATENT SPECIFICATION

(11) **EP 4 019 560 B1**
(45) Date of publication and mention of the grant of the patent: **29.10.2025**
(21) Application number: 20855601.9
(22) Date of filing: 20.08.2020
(51) Int. Cl.: C08F 212/08, H01M 10/0565, H01M 10/052, C08F 220/36, C08F 236/06, H01M 4/13, C08L 47/00, H01M 4/62, H01M 10/0525

(54) **ION CONDUCTIVE POLYMER, AND LITHIUM SECONDARY BATTERY ELECTRODE AND LITHIUM SECONDARY BATTERY WHICH COMPRISE SAME**
IONENLEITENDES POLYMER UND LITHIUM-SEKUNDÄRBATTERIE-ELEKTRODE UND LITHIUM-SEKUNDÄRBATTERIE DAMIT
POLYMÈRE CONDUCTEUR D'IONS ET ÉLECTRODE DE BATTERIE SECONDAIRE AU LITHIUM ET BATTERIE SECONDAIRE AU LITHIUM LE COMPRENANT

(30) Priority: 20.08.2019 KR 20190101874
(43) Date of publication of application: 29.06.2022
(73) Proprietor: Samsung SDI Co., Ltd., Yongin-si, Gyeonggi-do 17084 (KR); Hansol Chemical Co., Ltd., Jeollabuk-do 55321 (KR)
(72) Inventor: LEE, Jung Min, Yongin-Si Gyeonggi-do 17084 (KR); KIM, Min Jae, Yongin-Si Gyeonggi-do 17084 (KR); KIM, Yu Hyun, Yongin-Si Gyeonggi-do 17084 (KR); KIM, Chang Beom, Wanju-gun Jeollabuk-do 55321 (KR); PARK, Ji Hye, Wanju-gun Jeollabuk-do 55321 (KR); OH, Seung Hyun, Youngin-Si Gyeonggi-do 17084 (KR)
(74) Representative: Marks & Clerk LLP
(86) International application number: PCT/KR2020/011136
(87) International publication number: WO 2021/034130

(56) References cited:
- JP-A- 2015 168 754
- JP-A- H05 140 234
- JP-A- H06 263 825
- JP-A- H10 204 129
- KR-A- 20140 112 280
- KR-A- 20160 002 252
- KR-A- 20170 117 732
- KR-A- 20170 129 641
- US-A- 5 955 539

## Description

### TECHNICAL FIELD

The present disclosure relates to an ion-conductive polymer, an electrode including the same, and a lithium secondary battery including the same.

### BACKGROUND ART

Lithium secondary batteries are used as power sources for driving portable electronic appliances such as video cameras, mobile phones, and notebook computers. Rechargeable lithium secondary batteries have three times higher energy density per unit weight than known lead batteries, nickel-cadmium batteries, nickel metal hydride batteries, and nickel-zinc batteries, and may be charged at high speed.

In general, a lithium secondary battery uses a material capable of reversible intercalation and deintercalation of lithium ions as a cathode active material and an anode active material, and is manufactured by charging an electrolyte between a cathode including the cathode active material and an anode including the anode active material.

Meanwhile, due to requirements for higher capacity and maximization of energy density of lithium secondary batteries, the coating amount of an anode increases and the density of electrodes improves, and thus the coating conditions of electrodes are becoming stricter. However, among electrode materials, a binder plays a major role in maintaining the structure of an electrode plate, but acts as a material that increases the resistance of the electrode by inhibiting the mobility of lithium ions. Therefore, requirements for development of binders having lower resistance are continuing.

In general, a (meth)acrylic acid ester-based (acrylate) polymer is more effective in improving the mobility of lithium ions than styrene-butadiene rubber (SBR), which is widely used as a binder for an anode of a lithium secondary battery, but is disadvantageous in that a cycle life is reduced due to a decrease in adhesive strength.

Conventionally, lifespan characteristics have been improved by using a mixture of SBR and acrylate or by preparing a double-structured binder made of two materials, but heretofore, a satisfactory level of effectiveness has not been exerted.

Accordingly, there is still a need for a polymer material capable of solving these problems.

KR 2014 0112280 A discloses a polymer comprising styrene and butadiene used as a binder. US 5 955 539 A relates to cyanoethyl group-containing graft polymer. JP H05 140234 A relates to cyanoethyl group-containing polymer. JP H06 263825 A relates to cyanoethyl group-containing polymer.

### DESCRIPTION OF EMBODIMENTS

### TECHNICAL PROBLEM

According to an aspect, there are provided an ion-conductive polymer including a functional group having lithium-ion conductivity and having high adhesion performance, excellent stability in electrolyte and high mechanical strength, an electrode including the same, and a lithium secondary battery including the electrode.

### SOLUTION TO PROBLEM

According to an aspect,
An ion-conductive polymer includes a first monomer represented by Formula 1 below: 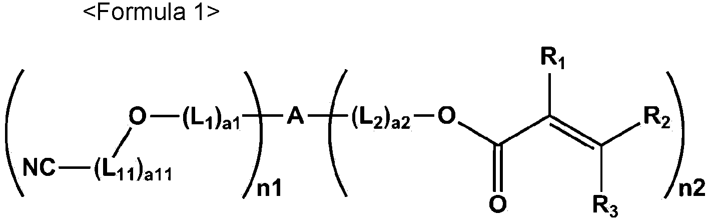 in Formula 1,
A is a substituted or unsubstituted C₁-C₁₀ alkyl group, a substituted or unsubstituted C₂-C₁₀ alkenyl group, or a substituted or unsubstituted C₂-C₁₀ alkynyl group,
L₁, L₂, and L₁₁ are each independently selected from a substituted or unsubstituted C₁-C₁₀ alkyl group, a substituted or unsubstituted C₂-C₁₀ alkenyl group, and a substituted or unsubstituted C₂-C₁₀ alkynyl group,
a1, a2 and a11 are each independently an integer selected from 0 to 5,
R₁ to R₃ are each independently selected from a hydrogen atom, a deuterium atom, a halogen atom, a substituted or unsubstituted C₁-C₁₀ alkyl group, a substituted or unsubstituted C₂-C₁₀ alkenyl group, and a substituted or unsubstituted C₂-C₁₀ alkynyl group,
n1 and n2 are each independently an integer selected from 1 to 5, and
wherein the ion-conductive polymer has a gel content of 50 to 99 %.

According to another aspect, an electrode for a lithium secondary battery includes the above-described ion-conductive polymer.

According to still another aspect, a lithium secondary battery includes a cathode; an anode; and an electrolyte charged therebetween, wherein at least one selected from the cathode and the anode is the above-described electrode.

### ADVANTAGEOUS EFFECTS OF DISCLOSURE

The ion-conductive polymer according to an aspect includes a functional group having lithium-ion conductivity, and has high adhesion performance, excellent stability in electrolyte, and high mechanical strength. Thus, this ion-conductive polymer may be used together with various kinds of active materials and may be used to manufacture various types of electrodes.

In addition, the lithium secondary battery including the above-described ion-conductive polymer has an effect of being easy to design and change such that it can exhibit optimal battery performance in various application fields such as mobile appliances, tablets, notebook PCs, power tools, automobiles, and ESS batteries.

### BRIEF DESCRIPTION OF DRAWINGS

FIG. 1 is a schematic view showing the structure of a lithium battery according to an embodiment.
FIG. 2 is a graph showing the resistance characteristics of lithium secondary batteries according to Example 1 and Comparative Example 1.
FIG. 3 is a graph showing the lifespan characteristics of lithium secondary batteries according to Example 1 and Comparative Example 1.

### <EXPLANATION OF REFERENCE NUMERALS DESIGNATING THE MAJOR ELEMENTS OF THE DRAWINGS>

1: Lithium battery 2: Anode
3: Cathode 4: Separator
5: Battery case 6: Cap assembly

### MODE OF DISCLOSURE

The present inventive concept described below can apply various transformations and can have various embodiments, and specific embodiments are illustrated in the drawings and described in detail in the detailed description. However, the present inventive concept may be embodied in many different forms, should not be construed as being limited to the embodiments set forth herein, and should be construed as including all modifications, equivalents, and alternatives within the scope of the present inventive concept defined in the appended claims.

The terms used herein is for the purpose of describing particular embodiments only and is not intended to be limiting of the inventive concept. Singular expressions include plural expressions unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the slash "/" or the term "and/or" includes any and all combinations of one or more of the associated listed items.

In the drawings, the diameters, lengths, and thicknesses are enlarged or reduced in order to clearly express various layers and regions. Throughout the specification, the same reference numerals are attached to similar parts Throughout the specification, when an element such as a layer, a film, a region or a component is referred to as being "on" another layer or element, it can be "directly on" the other layer or element, or intervening layers, regions, or components may also be present. Although the terms "first", "second", "third", etc., may be used herein to describe various elements, components, regions, and/or layers, these elements, components, regions, and/or layers should not be limited by these terms. These terms are used only to distinguish one component from another, not for purposes of limitation. Some of the components may be omitted in the drawings, but this is for helping the understanding of features of the invention and is not intended to exclude the omitted components.

In the present specification, the term "C₁-C₁₀ alkyl group" refers to a straight or branched chain hydrocarbon group having 1 to 10 carbon atoms, and examples thereof include a methyl group, an ethyl group, an isopropyl group, a propyl group, a butyl group, a methylene group, an ethylene group, an isopropylene group, a propylene group, and a butylene group.

In the present specification, the term "C₂-C₁₀ alkenyl group" refers to a straight or branched chain hydrocarbon group including at least one C=C double bond and having 2 to 10 carbon atoms, and examples thereof include an ethenyl group, an isopropenyl group, a propenyl group, a butenyl group, an ethenylene group, an isopropenyl group, a propenylene group, and a butenylene group.

In the present specification, the term "C₂-C₁₀ alkynyl group" refers to a straight or branched chain hydrocarbon group including at least one C≡C triple bond and having 2 to 10 carbon atoms, and examples thereof include an ethynyl group, an isopropynyl group, a propynyl group, a butynyl group, an ethynylene group, an isopropynylene group, a propynylene group, and a butynylene group.

In the present specification, unless otherwise defined, the substitution means that at least one hydrogen of a compound is substituted with deuterium, a halogen group, a C₁-C₃₀ alkoxy, a C₂-C₃₀ alkoxyalkyl, a hydroxyl group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, a phosphoric acid or a salt thereof, a C₁-C₃₀ alkyl group, a C₂-C₃₀ alkenyl group, a C₂-C₃₀ alkynyl group, a C₁-C₃₀ heteroalkyl group, a C₆-C₃₀ aryl group, a C₇-C₃₀ arylalkyl group, a C₂-C₃₀ heteroaryl group, a C₃-C₃₀ heteroarylalkyl group, a C₂-C₃₀ heteroaryloxy group, a C₃-C₃₀ heteroaryloxyalkyl group, or a C₆-C₃₀ heteroarylalkyloxy group.

In the present specification, the "hetero" refers to an atom selected from the group consisting of N, O, S and P.

The term "alkyl," used in Formulas refers to a fully saturated branched or unbranched (or straight or linear) hydrocarbon.

Non-limiting examples of "alkyl" include methyl, ethyl, n-propyl, isopropyl, n-butyl, isobutyl, sec-butyl, n-pentyl, isopentyl, neopentyl, n-hexyl, 3-methylhexyl, 2,2-dimethylpentyl, 2,3-dimethylpentyl, and n-heptyl.

At least one hydrogen atom of "alkyl" may be substituted with a halogen atom, a C₁-C₃₀ alkyl group substituted with a halogen atom (for example, CCF₃, CHCF₂, CH₂F, CCl₃, or the like), a C₁-C₃₀ alkoxy, a C₂-C₃₀ alkoxyalkyl, a hydroxyl group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, a phosphoric acid or a salt thereof, a C₁-C₃₀ alkyl group, a C₂-C₃₀ alkenyl group, a C₂-C₃₀ alkynyl group, a C₁-C₃₀ heteroalkyl group, a C₆-C₃₀ aryl group, a C₇-C₃₀ arylalkyl group, a C₂-C₃₀ heteroaryl group, a C₃-C₃₀ heteroarylalkyl group, a C₂-C₃₀ heteroaryloxy group, a C₃-C₃₀ heteroaryloxyalkyl group, or a C₆-C₃₀ heteroarylalkyloxy group.

The term "halogen atom" includes fluorine, bromine, chlorine, and iodine.

The term "aryl" used in Formulas is used alone or in combination, refers to an aromatic hydrocarbon including at least one ring.

The term "aryl" includes a group in which an aromatic ring is fused to at least one cycloalkyl ring.

Non-limiting examples of "aryl" include phenyl, naphthyl, and tetrahydronaphthyl.

In addition, at least one hydrogen atom of the "aryl" group may be substituted with the same substituent as in the case of the above-described alkyl group.

In the present specification, the copolymer may refer to a block copolymer, a random copolymer, a graft copolymer, or an alternating copolymer.

In the present specification, at least one of the substituents of the substituted C₁-C₁₀ alkyl group, the substituted C₂-C₁₀ alkenyl group, and the substituted C₂-C₂₀ alkynyl group may be selected from
a halogen, a C₁-C₁₀ alkyl group, a C₂-C₁₀ alkenyl group, and a C₂-C₁₀ alkynyl group.

Hereinafter, an ion-conductive polymer, an electrode including the same, and a lithium secondary battery including the electrode according to embodiments will be described in more detail.

An ion-conductive polymer according to an aspect includes a first monomer represented by Formula 1 below:

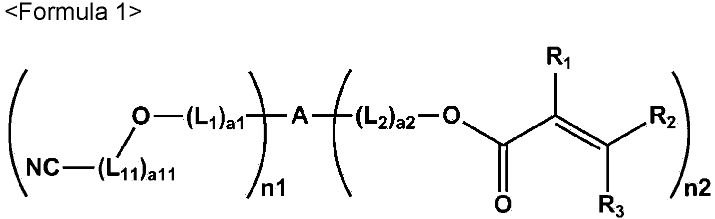

As described above, the ion-conductive polymer of the present disclosure includes at least one cyano group that is a lithium-ion-conductive functional group. The mobility of lithium ions (Li⁺) can be improved by unshared electron pairs of the cyano group (-C≡N:). Through this, it is possible to solve a problem that resistance of an electrode is increased due to the low lithium-ion conductivity of the existing SBR binder while maintaining high adhesion and low electrolyte swelling degree.

Moreover, since the ion-conductive polymer includes at least one acrylic group, the ion-conductive polymer is copolymerized with styrene and butadiene of a binder, and thus an ion-conductive function group (acrylic group) is chemically bonded to the binder not to cause elution or decomposition, so performance can be stably exhibited even after cycling. That is, compared to the case of using a conventional styrene-butadiene rubber (SBR) binder alone, the performance can be stably exhibited during the cycling.

In Formula 1, A is a substituted or unsubstituted C₁-C₁₀ alkyl group, a substituted or unsubstituted C₂-C₁₀ alkenyl group, or a substituted or unsubstituted C₂-C₁₀ alkynyl group.

In an embodiment, A may be a substituted or unsubstituted C₁-C₅ alkyl group.

In Formula 1, L₁, L₂, and L₁₁ are each independently selected from a substituted or unsubstituted C₁-C₁₀ alkyl group, a substituted or unsubstituted C₂-C₁₀ alkenyl group, and a substituted or unsubstituted C₂-C₁₀ alkynyl group.

In an embodiment, L₁, L₂, and L₁₁ may be each independently selected a substituted or unsubstituted C₁-C₁₀ alkyl group.

For example, L₁ and L₂ may be each independently selected from an ethyl group, a propyl group, a butyl group, and a pentyl group; and an ethyl group, a propyl group, a butyl group, and a pentyl group, each being substituted with a methyl group.

For example, L₁₁ may be selected from an ethyl group, a propyl group, a butyl group, and a pentyl group; and an ethyl group, a propyl group, a butyl group, and a pentyl group, each being substituted with a methyl group.

In Formula 1, a1, a2 and a11 are each independently an integer selected from 0 to 5.

When a1 is 0, -(L₁)a₁ is a single bond, and when a1 is 2 or more, a1 piece of L₁ may be the same or different from each other. When a2 is 0, -(L₂)a₂ is a single bond, and when a2 is 2 or more, a2 piece of L₂ may be the same or different from each other. When a11 is 0, -(L₁₁)a₁₁ is a single bond, and when a11 is 2 or more, a11 piece of L₁₁ may be the same or different from each other.

In Formula 1, R₁ to R₃ are each independently selected from a hydrogen atom, a deuterium atom, a halogen atom, a substituted or unsubstituted C₁-C₁₀ alkyl group, a substituted or unsubstituted C₂-C₁₀ alkenyl group, and a substituted or unsubstituted C₂-C₁₀ alkynyl group.

In an embodiment, R₁ may be a hydrogen atom or a substituted or unsubstituted C1-C5 alkyl group.

In an embodiment, R₂ and R₃ may be hydrogen atoms.

In Formula 1, n1 and n2 are each independently an integer selected from 1 to 5, and * and *' are bonding sites with neighboring atoms.

In an embodiment, the first monomer is selected from groups represented by Formulas 1-1 to 1-88 below: 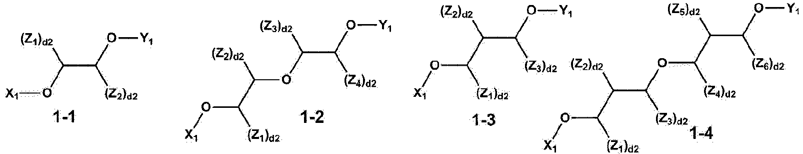 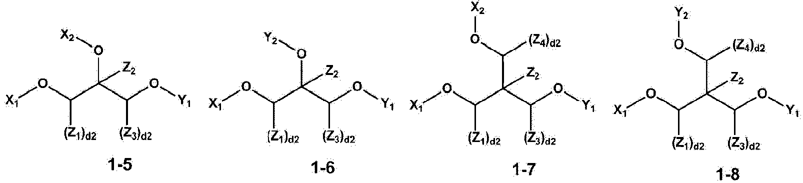 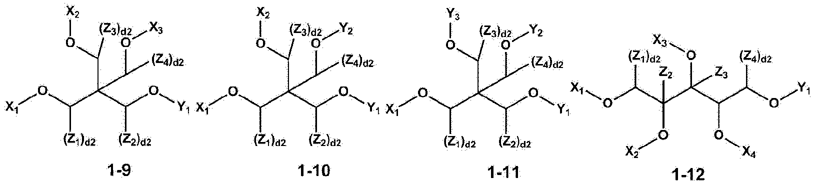 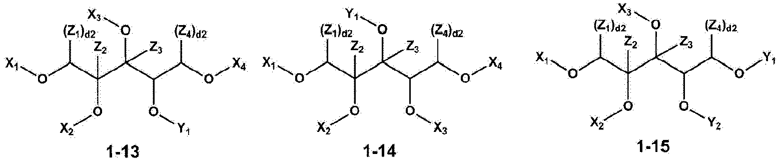 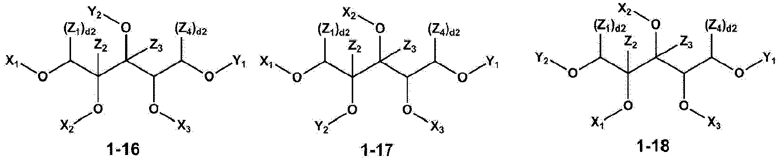 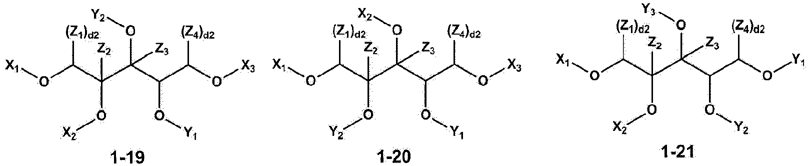 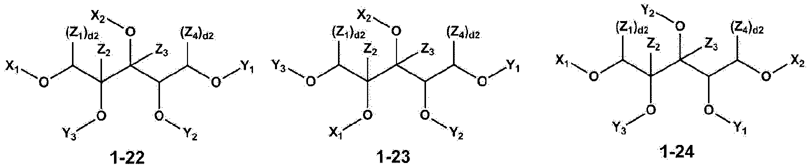 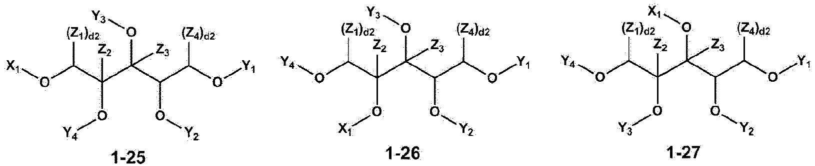 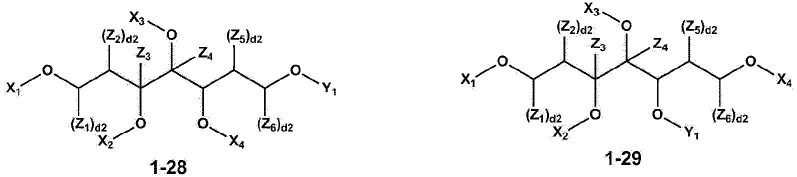 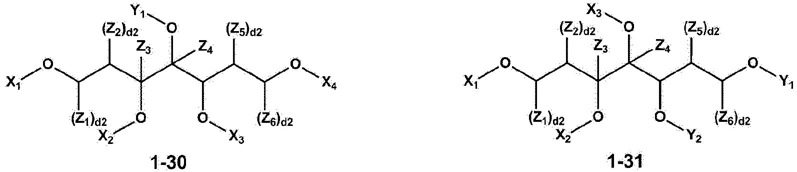 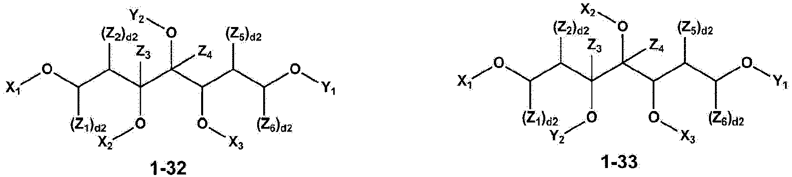 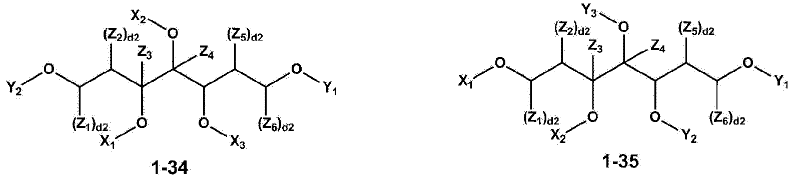 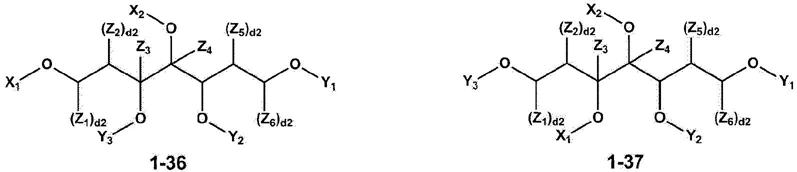 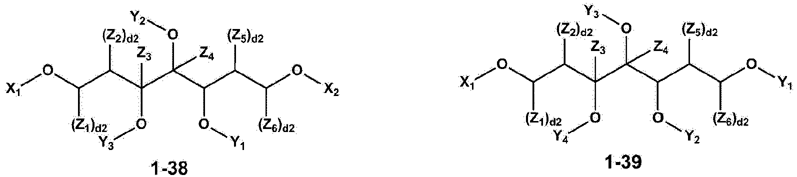 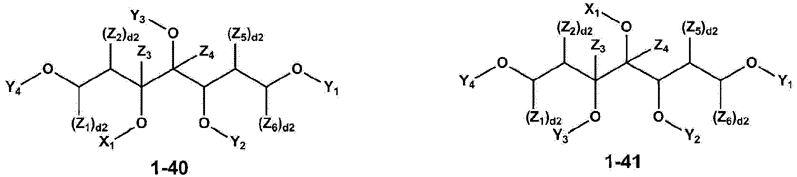 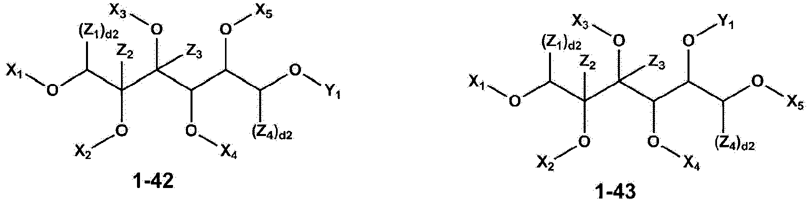 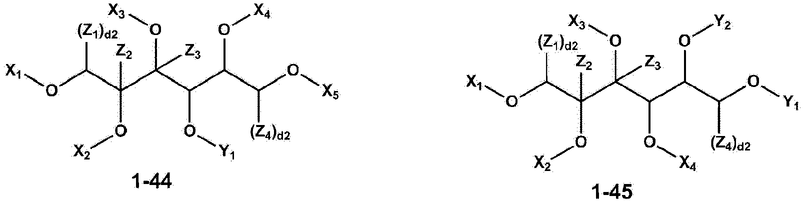 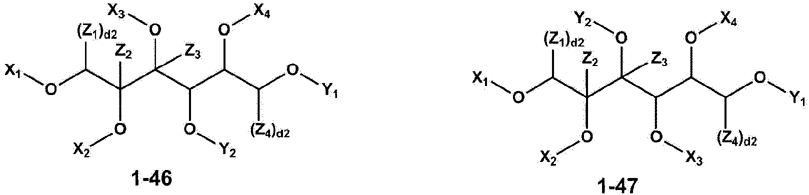 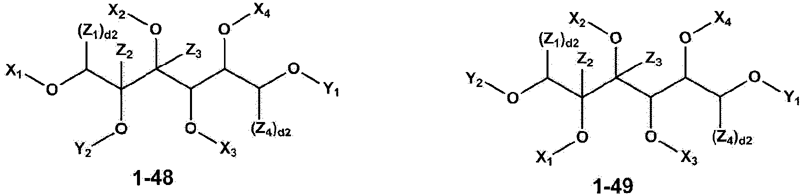 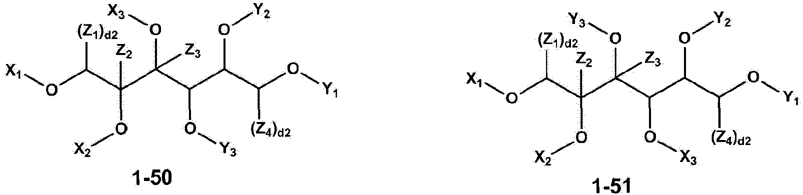 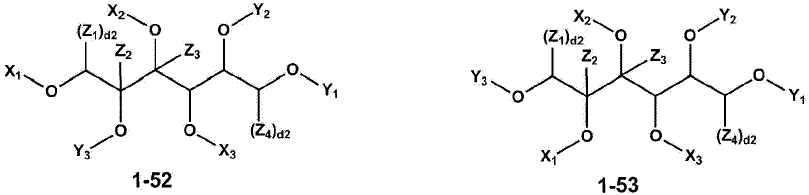 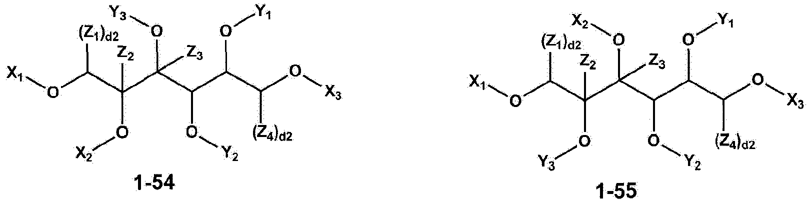 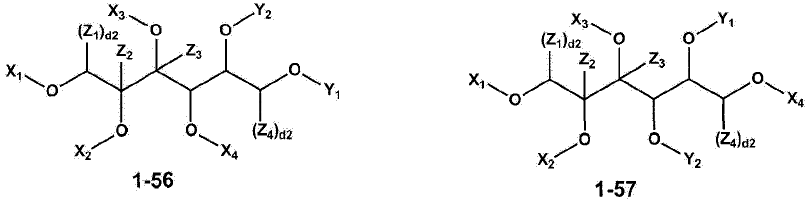 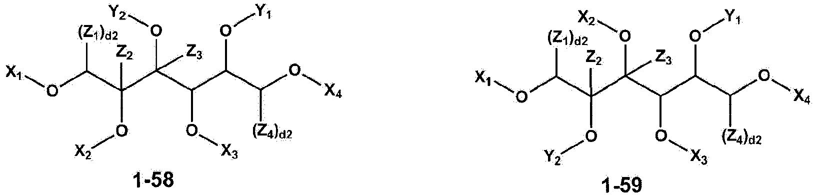 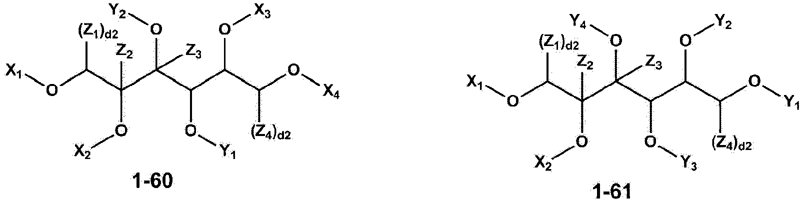 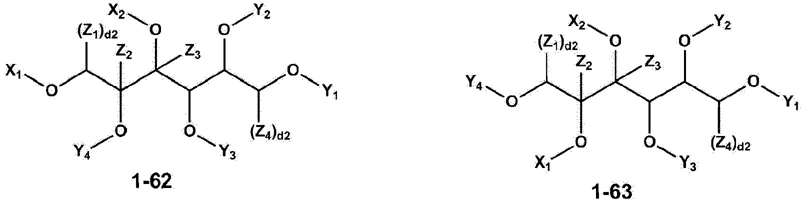 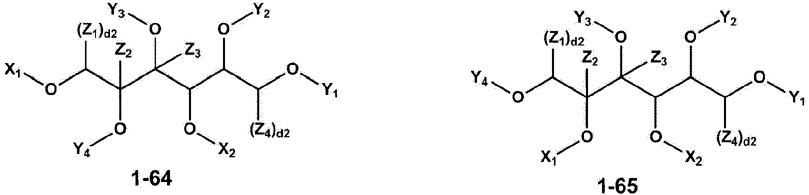 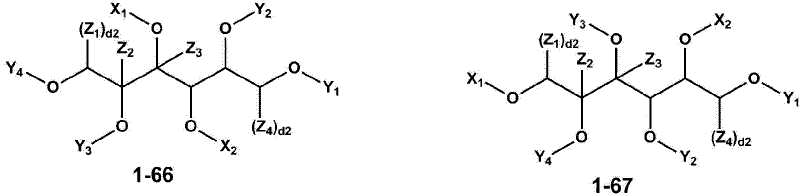 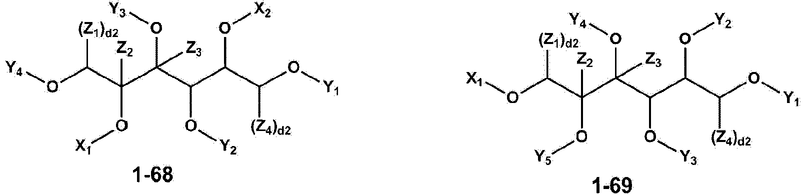 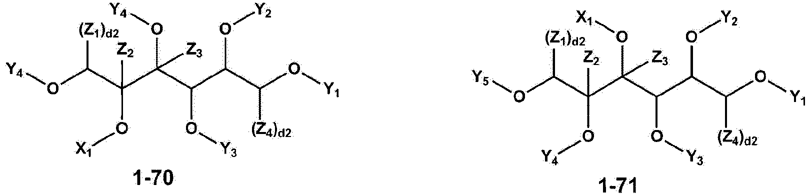 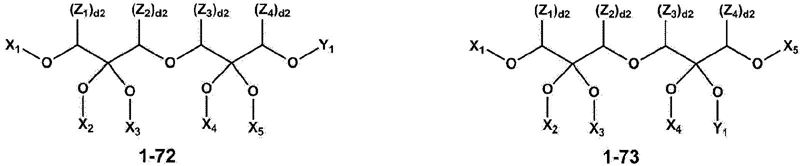 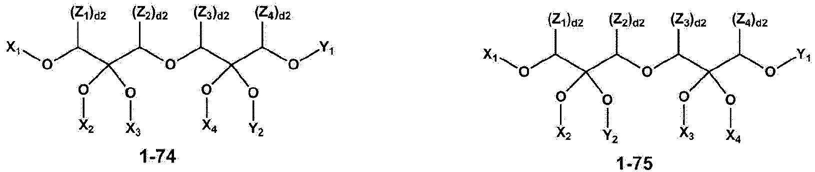 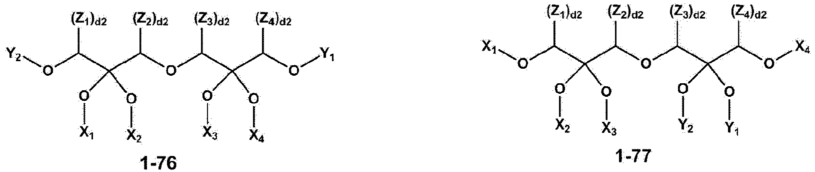 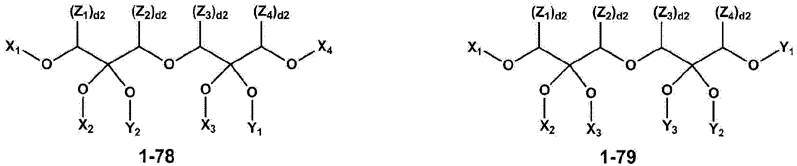 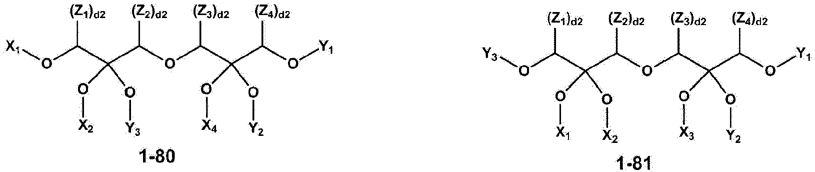 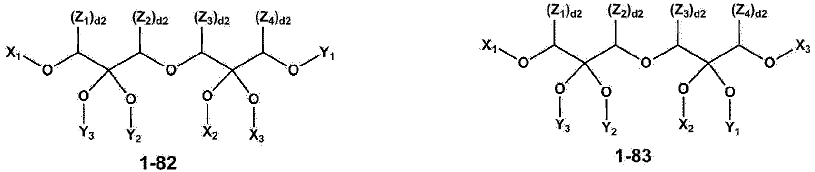 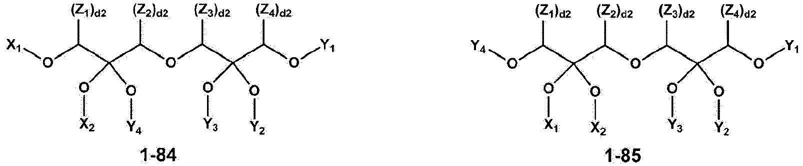 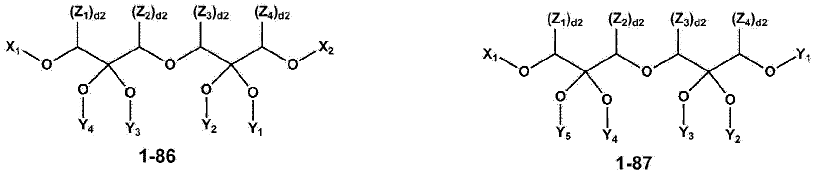 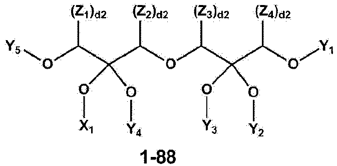 in Formulas 1-1 to 1-88,
X₁ to X₅ are groups each represented by 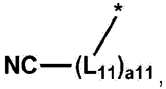 Y₁ to Y₅ are groups each represented by 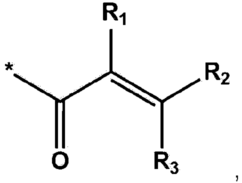
Z₁ to Z₆ are each independently selected from hydrogen, deuterium, a C₁-C₁₀ alkyl group, a C₂-C₁₀ alkenyl group, a C₂-C₁₀ alkynyl group, a cyano group, a hydroxyl group, a halogen group, a nitro group, deuterium, a C₁-C₁₀ alkyl group, a C₂-C₁₀ alkenyl group, a C₂-C₁₀ alkynyl group, a cyano group, a hydroxyl group, a halogen group, a C₁-C₁₀ alkyl group substituted with a nitro group, a C₂-C₁₀ alkenyl group substituted with a nitro group, and a C₂-C₁₀ alkynyl group substituted with a nitro group, and
d2 is an integer selected 0 to 2.

In an embodiment, the content of the first monomer may be 0.1 wt% to 30 wt% based on the total weight of total monomers included in the ion-conductive polymer.

For example, the content of the first monomer may be, but is not limited to, 0.1 wt% to 25 wt%, 0.1 wt% to 20 wt%, 0.5 wt% to 30 wt%, 0.5 wt% to 25 wt%, 0.5 wt% to 20 wt%, 1 wt% to 30 wt%, 1 wt% to 25 wt%, 1 wt% to 20 wt%, 5 wt% to 30 wt%, 5 wt% to 25 wt%, or 5 wt% to 20 wt%, and may be selected as an amount sufficient to obtain a desired effect of the ion-conductive polymer.

For example, the ion-conductive polymer may have a structure in which a C=C double bond of the first monomer represented by Formula 1 is polymerized by an addition reaction.

For example, the ion-conductive polymer may be represented by Formula 1A: 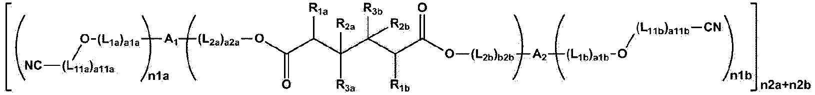 in Formula 1A, A1 and A2 may be understood based on the above-described A, L₁ₐ, L_{1b}, L₂ₐ, L_{2b}, L₁₁ₐ and L_{11b} may be understood based on the above-described L₁, L₂ and L₁₁, a1a, a1b, a2a, a2b, a11a, and a11 may be understood based on the above-described a1, a2 and a11, R₁ₐ to R₃ₐ and R_{1b} to R_{3b} may be understood based on the above-described R₁ to R₃, and n1a to n1b and n2a to n2b may be understood based on the above-described n1 and n2.

In an embodiment, the ion-conductive polymer may further include at least one selected from a conjugated diene-based monomer, a (meth)acrylic acid ester-based monomer, a styrene-based monomer, an unsaturated carboxylic acid monomer, an acrylonitrile-based monomer, and a (meth)acrylamide-based monomer.

For example, the conjugated diene-based monomer may be at least one selected from 1,3-butadiene, isoprene, 2,3-dimethyl-1,3-butadiene, and 1,3-pentadiene.

For example, the (meth)acrylic acid ester-based monomer may be at least one selected from methyl acrylate, ethyl acrylate, propyl acrylate, isopropyl acrylate, n-butyl acrylate, isobutyl acrylate, t-butyl acrylate, n-hexyl acrylate, 2-hexyl methacrylate, n-amyl acrylate, isoamyl acrylate, 2-ethylhexyl acrylate, and lauryl methacrylate.

For example, the styrene-based monomer may be at least one selected from styrene, α-methylstyrene, β-methylstyrene, p-t-butyl styrene, and divinylbenzene.

For example, the unsaturated carboxylic acid monomer may be at least one selected from acrylic acid, methacrylic acid, itaconic acid, fumaric acid, maleic acid, citraconic acid, methaconic acid, glutaconic acid, tetralidrophthalic acid, crotonic acid, and isocrotonic acid.

For example, the acrylonitrile-based monomer may be at least one selected from acrylonitrile and methacrylonitrile.

For example, the (meth)acrylamide-based monomer may be at least one selected from acrylamide, methacrylamide, n-methylolacrylamide, and n-butoxymethylacrylamide.

In an embodiment, the ion-conductive polymer may have an average particle diameter (D50) of 20 to 500 nm. Out of the above range, when the average particle diameter (D50) of the ion-conductive polymer is less than 20 nm, the viscosity of a binder may increase to cause a problem in electrode coating, and there is a problem in decreasing adhesion and increasing battery resistance. In contrast, when the average particle diameter (D50) of the ion-conductive polymer is mor than 500 nm, since the phase stability of the binder is reduced, so there is a problem in that aggregation of a slurry or defects during electrode coating occur.

The ion-conductive polymer may have a glass transition temperature (Tg) of -20 to 30°C. Out of the above range, when the glass transition temperature (Tg) of the ion-conductive polymer is less than -20°C, the low mechanical strength of a binder may cause a decrease in battery life due to repeated expansion and contraction of an anode active material, and there is a problem of contamination of a rolling roll during an electrode rolling process. In contrast, when the glass transition temperature (Tg) of the ion-conductive polymer is more than 30°C, the flexibility of the electrode deteriorates, problems may occur when the anode active material is detached and the electrode is wound when cutting the electrode.

The ion-conductive polymer has a gel content of 50 to 99%.

Here, the gel content is a percentage of the weight ratio of insoluble matter (gel, thermosetting polymer) to a solvent based on the total weight of the entire ion-conductive polymer.

An electrode for a lithium secondary battery according to another aspect includes: an electrode active material; and the above-described ion-conductive polymer.

A lithium secondary battery according to still another aspect includes: a cathode; an anode; and an electrolyte charged therebetween, wherein at least one selected from the cathode and the anode is the above-described electrode.

For example, the lithium secondary battery may be manufactured by the following method.

First, a cathode is prepared.

For example, a cathode active material composition in which a cathode active material, a conductive material, a binder, and a solvent are mixed is prepared. A cathode plate is prepared by coating a metal substrate (for example, metal current collector) with the cathode active material composition. Alternatively, the cathode plate may be prepared by casting the cathode active material composition onto a separate support, separating a film from the support and then laminating the separated film on a metal current collector. The cathode is not limited to the above-described form, but may have a form other than the above-described form.

The cathode active material, which is a lithium-containing metal oxide, may be used without limitation as long as it is generally used in the art. As the lithium-containing metal oxide, for example, one or more kinds of composite oxides of lithium and a metal selected from cobalt, manganese, nickel, and combinations thereof may be used. As a specific example, a compound represented by any one of Formulae of LiₐA_{1-b}B¹_{b}D¹₂ (where, 0.90 ≤ a ≤ 1.8, and 0 ≤ b ≤ 0.5 are satisfied); LiₐE_{1-b}B¹_{b}O_{2-c}D¹_{c} (where, 0.90 ≤ a ≤ 1.8, 0 ≤ b ≤ 0.5, and 0 ≤ c ≤ 0.05 are satisfied); LiE_{2-b}B¹_{b}O_{4-c}D¹_{c}(where, 0 ≤ b ≤ 0.5 and 0 ≤ c ≤ 0.05 are satisfied); LiₐNi_{1-b-c}Co_{b}B¹_{c}D¹_{α} (where, 0.90 ≤ a ≤ 1.8, 0 ≤ b ≤ 0.5, 0 ≤ c ≤ 0.05, and 0 < α ≤ 2 are satisfied); LiₐNi_{1-b-c}Co_{b}B¹_{c}O₂₋ₐF¹_{α} (where, 0.90 ≤ a ≤ 1.8, 0 ≤ b ≤ 0.5, 0 ≤ c ≤ 0.05, and 0 < α < 2 are satisfied); LiₐNi_{1-b-c}Co_{b}B¹_{c}O_{2-α}F¹₂(where, 0.90 ≤ a ≤ 1.8, 0 ≤ b ≤ 0.5, 0 ≤ c ≤ 0.05, and 0 < α < 2 are satisfied); LiₐNi_{1-b-c}Mn_{b}B¹_{c}D¹_{α} (where, 0.90 ≤ a ≤ 1.8, 0 ≤ b ≤ 0.5, 0 ≤ c ≤ 0.05, and 0 < α ≤ 2 are satisfied); LiₐNi_{1-b-c}Mn_{b}B¹_{c}O_{2-α}F¹_{α}(where, 0.90 ≤ a ≤ 1.8, 0 ≤ b ≤ 0.5, 0 ≤ c ≤ 0.05, and 0 < α < 2 are satisfied); LiₐNi_{1-b-c}Mn_{b}B¹_{c}O_{2-α}F¹₂ (where, 0.90 ≤ a ≤ 1.8, 0 ≤ b ≤ 0.5, 0 ≤ c ≤ 0.05, and 0 < α < 2 are satisfied); LiₐNi_{b}E_{c}G_{d}O₂(where, 0.90 ≤ a ≤ 1.8, 0 ≤ b ≤ 0.9, 0 ≤ c ≤ 0.5, and 0.001 ≤ d ≤ 0.1 satisfied);LiₐNi_{b}Co_{c}Mn_{d}GeO₂ (where, 0.90 ≤ a ≤ 1.8, 0 ≤ b ≤ 0.9, 0 ≤ c ≤ 0.5, 0 ≤ d ≤0.5, and 0.001 ≤ e ≤ 0.1 are satisfied); LiₐNiG_{b}O₂ (where, 0.90 ≤ a ≤ 1.8 and 0.001 ≤ b ≤ 0.1 are satisfied);LiₐCoG_{b}O₂ (where, 0.90 ≤ a ≤ 1.8 and 0.001 ≤ b ≤ 0.1 are satisfied); LiₐMnG_{b}O₂ (where, 0.90 ≤ a ≤ 1.8 and 0.001 ≤ b ≤ 0.1are satisfied); LiₐMn₂G_{b}O₄(where, 0.90 ≤ a ≤ 1.8 and 0.001 ≤ b ≤ 0.1 are satisfied);QO₂; QS₂; LiQS₂; V₂O₅; LiV₂O₅; Lil¹O₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄ may be used.

In Formulas above, A is Ni, Co, Mn, or a combination thereof; B¹ is Al, Ni, Co, Mn, Cr, Fe, Mg, Sr, V, a rare earth element, or a combination thereof; D' is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

For example, the lithium-containing metal oxide may be LiCoO₂, LiMnₓO₂ₓ(x=1, 2), LiNi₁₋ₓMnₓO₂ₓ(0<x<1), LiNi_{1-x-y}CoₓMn_{y}O₂ (0≤x≤0.5, 0≤y≤0.5), or LiFePO₄.

Also, a compound having a coating layer on the surface of the compound may be used, or a mixture of the compound and a compound having a coating layer may be used. The coating layer may include a coating element compound of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. As the coating element included in the coating layer, Mg, Al, Co, K, Na, Ca, Si, Ti, V, Sn, Ge, Ga, B, As, Zr, or a mixture thereof may be used. In the process of forming the coating layer, any coating method may be used as long as this compound may be coated with such elements by a method that does not adversely affect the physical properties of the cathode active material (for example, spray coating, dipping or the like). This coating method will be understood by those skilled in the art, so that a detailed description thereof will be omitted.

As the conductive material, for example, carbon black, graphite fine particles, or the like may be used, but is not limited thereto. Any conductive material may be used as long as it may be used in the art.

The above-described ion-conductive polymer may be used as the binder. In addition, examples of the binder may include, but are not limited to, a vinylidene fluoride / hexafluoropropylene copolymer, polyvinylidene fluoride (PVDF), polyacrylonitrile, polymethylmethacrylate, polytetrafluoroethylene and mixtures thereof, and a styrene butadiene rubber-based polymer. Any binder may be used as long as it may be used in the art.

As the solvent, N-methylpyrrolidone, acetone, water, or the like may be used, but the present disclosure is not limited thereto. Any solvent may be used as long as it is used in the related technical field.

The content of the cathode active material, the content of the conductive material, the content of the binder, and the content of the solvent are levels commonly used in the lithium secondary battery. The content of the binder is as described above. At least one of the conductive material, the binder, and the solvent may be omitted depending on the use and configuration of the lithium battery.

Next, an anode is prepared.

For example, an anode active material composition in which an anode active material, a conductive material, a binder, and a solvent are mixed is prepared. An anode plate is prepared by directly coating a metal current collector with the anode active material composition and drying the anode active material composition. Alternatively, the anode plate may be prepared by casting the anode active material composition onto a separate support, separating a film from the support and then laminating the separated film on a metal current collector.

The anode active material may be used without limitation. Any anode active material may be used as long as it may be used in the art. For example, the anode active material may include at least one selected from a lithium metal, a metal alloyable with lithium, a transition metal oxide, a non-transition metal oxide, and a carbon-based material.

For example, the metal alloyable with lithium may be Si, Sn, Al, Ge, Pb, Bi, Sb, a Si-Y alloy (Y is an alkaline metal, an alkaline earth metal, a group 13 element, a group 14 element, a transition metal, or a combination thereof, not Si), or a Sn-Y alloy (Y is an alkaline metal, an alkaline earth metal, a group 13 element, a group 14 element, a transition metal, or a combination thereof, not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

For example, the transition metal oxide may be lithium titanium oxide, vanadium oxide, lithium vanadium oxide, or the like.

For example, the non-transition metal oxide may be SnO₂, SiOₓ (0<x<2), or the like.

The carbon-based material may be crystalline carbon, amorphous carbon, or a mixture thereof. The crystalline carbon may be graphite such as natural graphite or artificial graphite of an amorphous, plate-like, flake-like, spherical or fibrous form. The amorphous carbon may be soft carbon (low-temperature fired carbon), hard carbon, mesophase pitch carbide, or fired coke.

The conductive material, binder and solvent in the anode active material composition may be the same as those in the cathode active material composition.

The content of the anode active material, the content of the conductive material, the content of the binder, and the content of the solvent are levels commonly used in the lithium secondary battery At least one of the conductive material, the binder, and the solvent may be omitted depending on the use and configuration of the lithium secondary battery.

Next, a separator to be inserted between the anode and the cathode is prepared.

As the separator, any separator may be used as long as it is commonly used in a lithium battery. A separator having low resistance to the movement of ions in the electrolyte and superior in electrolyte wettability may be used. For example, the separator may include any one selected from glass fiber, polyester, Teflon, polyethylene, polypropylene, polytetrafluoroethylene (PTFE), and combinations thereof, and may be made in the form of nonwoven fabric or woven fabric. For example, a windable separator including polyethylene, polypropylene, or the like may be used in a lithium-ion battery, and a separator having good electrolyte impregnation ability may be used in a lithium-ion polymer battery. For example, the separator may be manufactured by the following method.

A polymer resin, a filler, and a solvent are mixed to prepare a separator composition. The separator composition is directly applied on an electrode and dried to form a separator. Alternatively, the separator composition is cast on a support and dried, a separation film is separated from the support, and then the separation film is laminated on the electrode to form a separator.

The polymer resin used in the manufacture of the separator is not limited, and any material may be used as long as it may be used in a binder of an electrode plate. For example, as the polymer resin, a vinylidene fluoride/hexafluoropropylene copolymer, polyvinylidene fluoride (PVDF), polyacrylonitrile, polymethyl methacrylate, or a mixture thereof may be used.

Next, an electrolyte is prepared.

For example, the electrolyte may be an organic electrolyte. The electrolyte may be a solid electrolyte. For example, the solid electrolyte may be boron oxide, lithium oxynitride, or the like, but is not limited thereto. Any solid electrolyte may be used as long as it may be used in the art. The solid electrolyte may be formed on the cathode by sputtering or the like.

For example, the organic electrolyte may be prepared by dissolving lithium salt in an organic solvent.

As the organic solvent, any organic solvent may be used as long as it may be used in the art. For example, the organic solvent may include at least one selected from ethyl methyl carbonate (EMC), methyl propyl carbonate, ethyl propyl carbonate, dimethyl carbonate (DMC), diethyl carbonate (DEC), dipropyl carbonate, propylene carbonate (PC), ethylene carbonate (EC), fluoroethylene carbonate (FEC) ), vinylene carbonate (VC), vinylethylene carbonate (VEC), butylene carbonate, ethyl propionate, ethyl butyrate, dimethyl sulfoxide, dimethylformamide, dimethylacetamide, gammavalerolactone, gamma-butyrolactone, and tetrahydrofuran, but is not limited thereto. Any organic solvent may be used as long as it may be used in the art.

As the lithium salt, any lithium salt may be used as long as it may be used in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(here, x and y are natural number), LiCl, Lil, or a mixture thereof.

The concentration of the lithium salt in the electrolyte may be 0.01 to 5.0 M, but is not necessarily limited to this range, and an appropriate concentration may be used as necessary. For example, further improved battery characteristics can be obtained within the above concentration range. For example, the concentration of the lithium salt in the electrolyte may be 0.01 to 4.0 M. For example, the concentration of the lithium salt in the electrolyte may be 0.01 to 3.0 M. For example, the concentration of the lithium salt in the electrolyte may be 0.01 to 2.0 M.

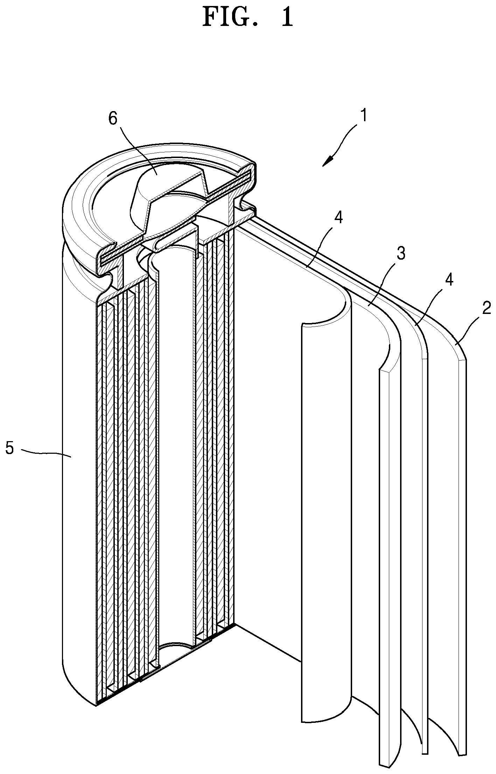

As shown in FIG. 1, the lithium secondary battery 1 includes a cathode 3, an anode 2, and a separator 4. The anode 3, the cathode 2, and the separator 4 are wound or folded and accommodated in a battery case 5. Then, an organic electrolyte is injected into the battery case 5, and the battery case 5 is sealed with a cap assembly 6 to complete the manufacture of the lithium secondary battery 1. The battery case 5 may have a cylindrical shape, a rectangular shape, or a thin film shape. For example, the lithium secondary battery 1 may be a thin-film battery. The lithium secondary battery 1 may be a lithium-ion battery.

The separator may be located between the anode and the cathode to form a battery structure. The battery structure is laminated as a bi-cell structure and then impregnated with an organic electrolyte, and the resulting product is accommodated in a pouch and sealed to complete a lithium-ion polymer battery.

Further, the plurality of battery structures are laminated to form a battery pack, and this battery pack may be used in all appliances requiring high capacity and high power. For example, the battery pack may be used in notebooks, smart phones, electric vehicles, and the like.

In addition, the lithium secondary battery may be used in an electric vehicle (EV) because of its excellent life characteristics and high-rate characteristics. For example, the lithium secondary battery may be used in hybrid vehicles such as plug-in hybrid electric vehicles (PHEV). In addition, the lithium secondary battery may be used in applications where a large amount of power storage is required. For example, the lithium secondary battery may be used in electric bicycles, power tools, and the like.

Hereinafter, the present disclosure will be described in more detail with reference to Examples and Comparative Examples. However, these Examples are for illustrating the present disclosure, and the scope of the present disclosure is not limited thereto.

### Preparation Example 1 (Preparation of ion-conductive polymer)

### 1) Synthesis of intermediate A

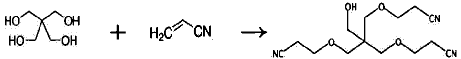

1% sodium hydroxide solution (NaOH solution, 220 g) and pentaerythritol (pentaerythritol, 300 g, 2.20 mol) were dissolved in dichloromethane (564 g) and heated to 60 °C. Acrylonitrile (350 g, 6.6 mol) was injected into the heated solution at a constant rate. The solution was stirred at 45°C for 2 hours, and then cooled to room temperature. An organic layer and an aqueous layer from the solution were separated, and extracted and purified with dichloromethane and a saturated sodium chloride solution (NaCl solution), and purified. The purification process was carried out three times, followed by drying to obtain 430 g of Intermediate A (yield: 66%).
1H-NMR (600 MHz, CDCl3): ppm 2.231 (s, 1H), 2.568 (t, 6H), 3.477 (s, 6H), 3.613 (t, 6H), 3.634 (s, 2H)

### 2) Synthesis of first monomer

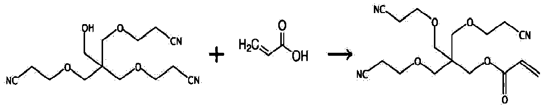

Under a nitrogen atmosphere, a Deanstock trap was installed in a reactor, and toluene (1800 g) was injected. The prepared intermediate A (150 g, 0.51 mol) and acrylic acid (36.5 g, 0.5 mol) were injected and heated to 60°C. Sulfuric acid (40 g, 0.4 mol) was added, followed by stirring for 3 hours. After the product was cooled to room temperature, toluene was removed, and the product was extracted and purified with ethyl acetate, a saturated sodium hydrogen carbonate solution, and a saturated sodium chloride solution. The purification process was carried out three times, followed by drying to obtain 62 g of first monomer (yield: 35%).
1H-NMR (600 MHz, CDCl3): ppm 2.571 (t, 6H), 3.501 (s, 6H), 3.640 (t, 6H), 4.202 (s, 2H), 5.825(d, 1H), 6.111 (t, 1H), 6.367(d, 1H)

### 3) Preparation of ion-conductive polymer

After alkyl diphenyloxide disulfonate as a surfactant was added to 200 parts by weight of distilled water in an amount of 0.9 parts by weight with respect to 100 parts by weight of the monomer mixture, followed by emulsifying, potassium persulfate as a decomposition initiator was added in an amount of 0.8 parts by weight with respect to 100 parts by weight of the monomer mixture, 100 parts by weight of the monomer mixture was added, and a continuous emulsion polymerization reaction proceeds to prepare an ion-conductive polymer containing the synthesized first monomer. The polymerization reaction was performed at 80°C for 5 hours. The monomer mixture was a mixture including 1,3-butadiene, styrene, and the first monomer, the ratio of the monomers was adjustable, and 5 parts by weight of the first monomer was used during this polymerization process

### (Manufacture of lithium secondary battery)

### Example 1

98 wt% of artificial graphite (BSG-L, Tianjin BTR New Energy Technology Co., Ltd.), 1.0 wt% of the ion-conductive polymer prepared in Preparation Example 1, and 1.0 wt% of carboxymethylcellulose (CMC, NIPPON A&L) were mixed, introduced into distilled water, and then stirred for 60 minutes using a mechanical stirrer to prepare an anode active material slurry. The slurry was applied onto a copper current collector having a thickness of 10 µm to a thickness of about 60 µm using a doctor blade, dried at 110 °C for 0.5 hours using a hot air dryer, and then dried at 120 °C for 4 hours once again, and roll-pressed to prepare an anode plate.

### (Preparation of cathode)

97.45 wt% of LiNi_{0.88}Co_{0.105}Mn_{0.015}O₂, 0.5 wt% of artificial graphite (SFG6, Timcal) powder as conductive material, 0.7 wt% of carbon black (Ketjenblack, ECP), 0.25 wt% of modified acrylonitrile rubber (BM-720H, Zeon Corporation), 0.9 wt% of polyvinylidene fluoride (PVdF, S6020, Solvay), and 0.2 wt% of polyvinylidene fluoride (PVdF, S5130, Solvay) were mixed, introduced into a N-methyl-2-pyrrolidone solvent, and then stirred for 30 minutes using a mechanical stirrer to prepare a cathode active material slurry. The slurry was applied onto an aluminum current collector having a thickness of 20 µm to a thickness of about 60 µm using a doctor blade, dried at 100 °C for 0.5 hours using a hot air dryer, and then dried in vacuum at 120 °C for 4 hours once again, and roll-pressed to prepare a cathode plate.

### (Preparation of electrolyte)

1.5M LiPF₆ was added to a solvent in which ethylene carbonate (EC), diethyl carbonate (DEC), and fluoroethylene carbonate (FEC) were mixed in a volume ratio of 5:70:25, to prepare an electrolyte.

A lithium secondary battery was manufactured by using a 14 µm-thick polyethylene separator coated with ceramic as a separator together with the aboveprepared anode, cathode and electrolyte.

### Comparative Example 1

A lithium secondary battery was manufactured in the same manner as in Example 1, except that 1.0 wt% of a styrene-butadiene rubber (SBR) binder (ZEON) was used instead of the ion-conductive polymer prepared in Preparation Example 1.

### Evaluation Example 1: Resistance test

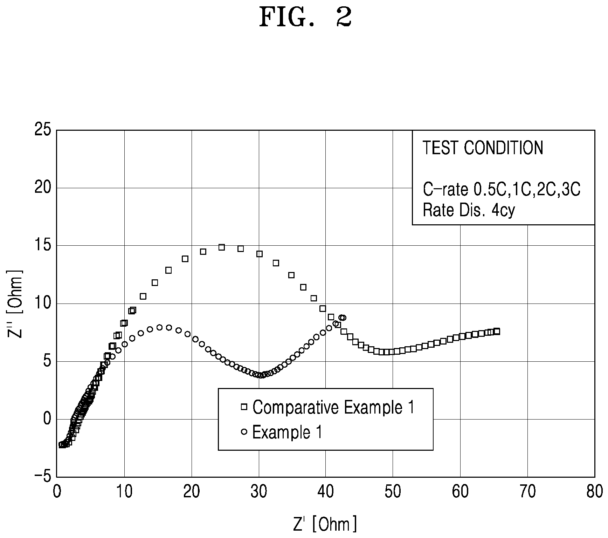

The lithium secondary batteries manufactured in Example 1 and Comparative Example 1 were charged and discharged for 4 cycles under C-rate conditions of 0.5C, 1C, 2C, and 3C, respectively, and resistance characteristics were measured and shown in FIG. 2.

As shown in FIG. 2, it may be found that the lithium secondary battery of Example 1 has a lower resistance increase rate than the lithium secondary battery of Comparative Example 1. This is considered to be because the cyano group, which is a functional group having lithium-ion conductivity of the first monomer included in the ion-conductive polymer, can effectively lower the resistance of an electrode.

### Evaluation Example 2: Evaluation of cycle lifespan Characteristics (25°C)

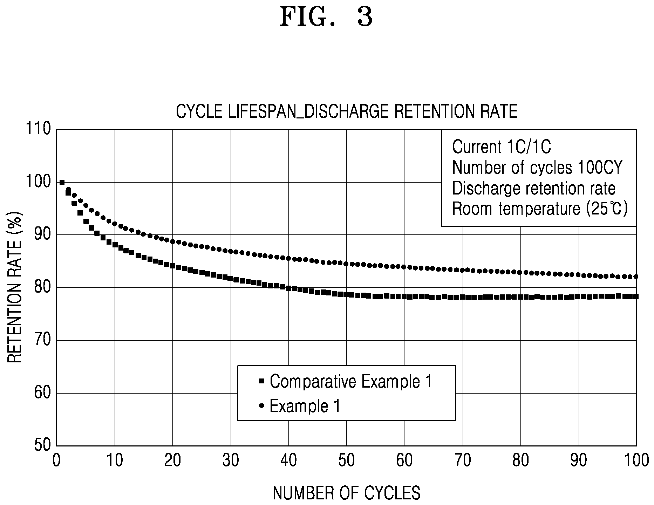

The process of charging lithium secondary batteries according to Example 1 and Comparative Example 1 at 25°C under cut-off conditions of CC-CV 4A, 4.2V, and 100 mA and then discharging these batteries under cut-off conditions of CC 10A and 2.5V were repeatedly performed from 1 cycle to 100 cycles, and cycle lifespan characteristics thereof were evaluated. The capacity changes up to 100 cycles are shown in FIG. 3.

Referring to FIG. 3, it may be found that the discharge cycle characteristics of the lithium secondary battery according to Example 1 is superior to that of the lithium secondary battery according to Comparative Example 1, and thus it may be found that the lithium secondary battery including the ion-conductive polymer including the monomer represented by Formula 1 as a binder exhibits excellent lifespan characteristics.

### Comparative Preparation Example 1

An ion-conductive polymer was prepared in the same manner as in Preparation Example 1, except that the content of the first monomer was changed to 20 parts by weight with respect to 100 parts by weight of the monomer mixture.

In this case, the average particle diameter (D50) of the ion-conductive polymer was 10 nm.

### Preparation Example 2

An ion-conductive polymer was prepared in the same manner as in Comparative Preparation Example 1, except that the average particle diameter (D50) of the ion-conductive polymer was changed to 20 nm.

### Preparation Example 3

An ion-conductive polymer was prepared in the same manner as in Comparative Preparation Example 1, except that the content of the first monomer was changed to 10 parts by weight with respect to 100 parts by weight of the monomer mixture and the average particle diameter (D50) of the ion-conductive polymer was changed to 200 nm.

### Preparation Example 4

An ion-conductive polymer was prepared in the same manner as in Comparative Preparation Example 1, except that the average particle diameter (D50) of the ion-conductive polymer was changed to 200 nm.

### Comparative Preparation Example 2

An ion-conductive polymer was prepared in the same manner as in Comparative Preparation Example 1, except that the content of the first monomer was changed to 50 parts by weight with respect to 100 parts by weight of the monomer mixture and the average particle diameter (D50) of the ion-conductive polymer was changed to 200 nm.

### Preparation Example 5

An ion-conductive polymer was prepared in the same manner as in Comparative Preparation Example 1, except that the average particle diameter (D50) of the ion-conductive polymer was changed to 500 nm.

### Comparative Preparation Example 3

An ion-conductive polymer was prepared in the same manner as in Comparative Preparation Example 1, except that the average particle diameter (D50) of the ion-conductive polymer was changed to 800 nm.

### Comparative Preparation Example 4: Preparation of anode plate

98 wt% of artificial graphite (BSG-L, Tianjin BTR New Energy Technology Co., Ltd.), 1.0 wt% of the ion-conductive polymer prepared in Comparative Preparation Example 1, and 1.0 wt% of carboxymethylcellulose (CMC, NIPPON A&L) were mixed, introduced into distilled water, and then stirred for 60 minutes using a mechanical stirrer to prepare an anode active material slurry. The slurry was applied onto a copper current collector having a thickness of 10 µm to a thickness of about 60 µm using a doctor blade, dried at 100 °C for 0.5 hours using a hot air dryer, and then dried at 120 °C for 4 hours once again, and roll-pressed to prepare an anode plate.

### Comparative Preparation Examples 5 to 6 and Preparation Examples 6 to 9: Preparation of anode plates

Anode plates were prepared in the same manner as in Comparative Preparation Example 4, except that the ion-conductive polymers prepared in Comparative Preparation Examples 2 to 3 and Preparation Examples 2 to 5 were used, respectively, instead of the ion-conductive polymer prepared in Comparative Preparation Example 1.

### Evaluation Example 3: Evaluation of electrode adhesion force

The adhesion forces of the anode plates according to Comparative Preparation Examples 4 to 6 and Preparation Examples 6 to 9 were evaluated according to the following method, and are shown in Table 1 to be described later.

The prepared negative electrode plate was cut into a size of 25 mm in width and 100 mm in length. A double-sided tape having an area of 20 mm in width and 40 mm in length was attached to an acrylic plate having an area of 40 mm in width and 100 mm in length. The prepared anode plate was attached to the double-sided tape, pressed lightly 5 times by a hand roller, and then mounted on a UTM (20kgf Load cell) to peel off about 25 mm of one side of the anode plate. Then, the anode plate was fixed to the upper clip of a tensile strength machine, the tape attached to one side of the anode plate was fixed to the lower clip thereof and peeled off at a speed of 100 mm/min, and 180° peeling strength was measured. After five anode plates were prepared, respectively, adhesion force tests were performed on these anode plates, results obtained by calculating an average value from the test results are shown in Table 1 below.

Referring to Table 1, it may be ascertained that the adhesion forces of the anode plates according to Preparation Examples 6 to 9 are superior to that of the anode plates according to Comparative Preparation Examples 4 and 6, and exhibits a similar level or higher adhesion force as compared with the anode plate according to Comparative Preparation Example 5.

### Examples 2 to 5 and Comparative Examples 2 to 4: Manufacture of lithium secondary batteries

Lithium secondary batteries were manufactured in the same manner as in Example 1, except that the ion-conductive polymers prepared in Comparative Preparation Examples 1 to 3 and Preparation Examples 2 to 5 were used instead of the ion-conductive polymer prepared in Preparation Example 1.

### Evaluation Example 4: Evaluation of lifespan retention rate

The process of charging lithium secondary batteries according to Examples 2 to 5 and Comparative Examples 2 to 4 at 0°C under cut-off conditions of CC-CV 4A, 4.2V, and 100 mA and then discharging these batteries under cut-off conditions of CC 10A and 2.5V were repeatedly performed from 1 cycle to 100 cycles, and cycle lifespan retention rates thereof were evaluated.

The cycle lifespan retention rate was expressed as a percentage of a value obtained by dividing the discharge capacity in the 100th cycle by the discharge capacity in the first cycle.

Referring to Table 1, it may be ascertained that the lithium secondary batteries according to Comparative Examples 2 and 4 cannot be manufactured, whereas the lithium secondary batteries according to Examples 2 to 5 exhibit excellent cycle lifespan retention rates.

In addition, it may be ascertained that the lithium secondary battery according to Comparative Example 3 has a relatively good electrode plate adhesion force, but is not good in lifespan retention rate as compared with the lithium secondary batteries according to Examples 2 to 5 Through this, it may be found that the larger the binder particle size, the better the electrode plate adhesion, but when the content of the first monomer is too high, the lifespan retention rate is rather reduced.

**[Table]**

| | Binder diameter (nm) | Content of first monomer | Electrode plate adhesion force (gf/mm) | Lifespan retention rate (%) (@ 0°C) |
|---|---|---|---|---|
| Comparative Preparation Example 4 (Comparative Example 2) | 10 | 20 | 0.5 | Cannot be manufactured |
| Preparation Example 6 (Example 2) | 20 | 20 | 0.8 | 77 |
| Preparation Example 7 (Example 3) | 200 | 10 | 1.2 | 80 |
| Preparation Example 8 (Example 4) | | 20 | 1.3 | 82 |
| Comparative Preparation Example 5 (Comparative Example 3) | | 50 | 1.1 | 68 |
| Preparation Example 9 (Example 5) | 500 | 20 | 0.9 | 79 |
| Comparative | 800 | 20 | 0.4 | Cannot be |
| Preparation Example 6 (Comparative Example 4) | | | | manufactured |

As described above, the embodiments disclosed in the present disclosure are not intended to limit the technical spirit of the present disclosure, but intended to explain the technical spirit of the present disclosure, and the protection scope of the present invention should be interpreted by the following claims.

### INDUSTRIAL APPLICABILITY

The ion-conductive polymer according to an aspect includes a functional group having lithium-ion conductivity, and has high adhesion performance, excellent stability in electrolyte, and high mechanical strength. Thus, this ion-conductive polymer may be used together with various kinds of active materials and may be used to manufacture various types of electrodes.

In addition, the lithium secondary battery including the above-described ion-conductive polymer has an effect of being easy to design and change such that it can exhibit optimal battery performance in various application fields such as mobile appliances, tablets, notebook PCs, power tools, automobiles, and ESS batteries.

## Claims

1. An ion-conductive polymer comprising a first monomer represented by Formula 1 below: 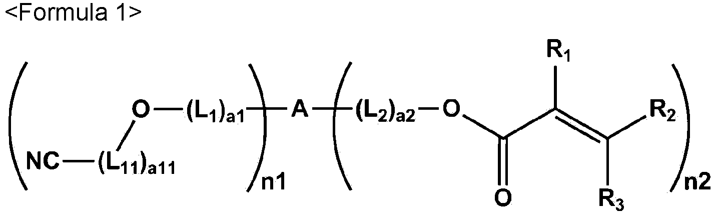 wherein, in Formula 1,
A is a substituted or unsubstituted C₁-C₁₀ alkyl group, a substituted or unsubstituted C₂-C₁₀ alkenyl group, or a substituted or unsubstituted C₂-C₁₀ alkynyl group,
L₁, L₂, and L₁₁ are each independently selected from a substituted or unsubstituted C₁-C₁₀ alkyl group, a substituted or unsubstituted C₂-C₁₀ alkenyl group, and a substituted or unsubstituted C₂-C₁₀ alkynyl group,
a1, a2 and a11 are each independently an integer selected from 0 to 5,
R₁ to R₃ are each independently selected from a hydrogen atom, a deuterium atom, a halogen atom, a substituted or unsubstituted C₁-C₁₀ alkyl group, a substituted or unsubstituted C₂-C₁₀ alkenyl group, and a substituted or unsubstituted C₂-C₁₀ alkynyl group,
n1 and n2 are each independently an integer selected from 1 to 5, and
wherein the ion-conductive polymer has a gel content of 50 to 99 %, wherein the gel content is a percentage of the weight ratio of insoluble matter to a solvent based on the total weight of the entire conductive polymer.

2. The ion-conductive polymer of claim 1, wherein A is a substituted or unsubstituted C₁-C₅ alkyl group.

3. The ion-conductive polymer of claim 1, wherein L₁, L₂, and L₁₁ are each independently selected from a substituted or unsubstituted C₁-C₁₀ alkyl group

4. The ion-conductive polymer of claim 1, wherein L₁₁ is selected from: an ethyl group, a propyl group, a butyl group, and a pentyl group; and an ethyl group, a propyl group, a butyl group, and a pentyl group, each being substituted with a methyl group.

5. The ion-conductive polymer of claim 1, wherein R₁ is a hydrogen atom or a substituted or unsubstituted C₁-C₅ alkyl group.

6. The ion-conductive polymer of claim 1, wherein R₂ and R₃ are hydrogen atoms.

7. The ion-conductive polymer of claim 1, wherein the first monomer is selected from groups represented by Formulas 1-1 to 1-88 below: 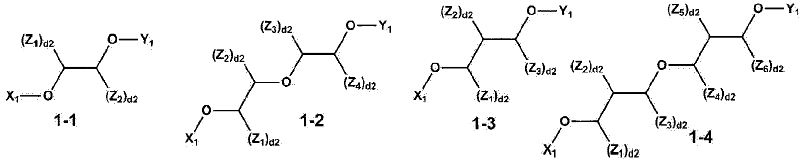 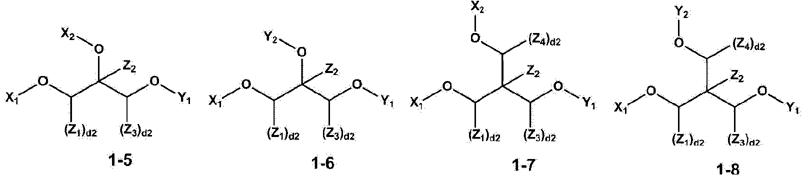 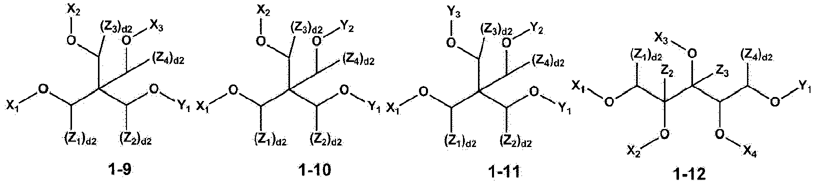 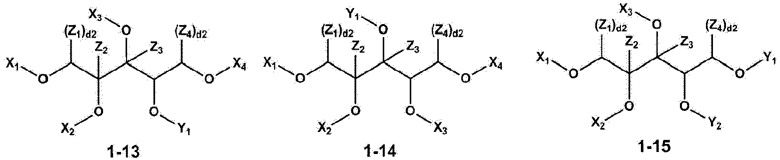 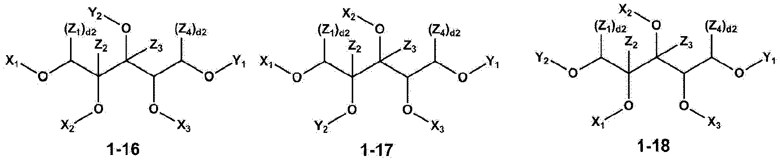 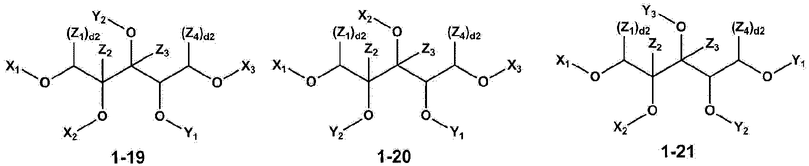 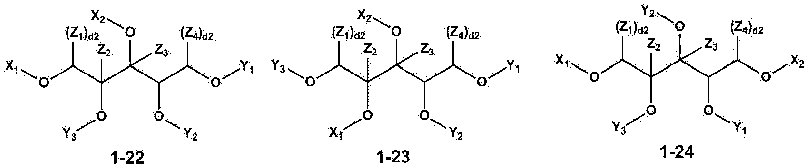 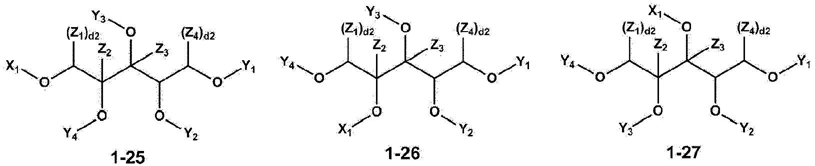 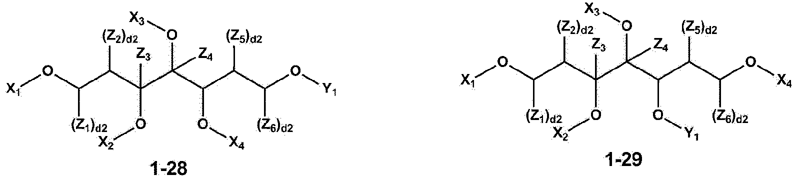 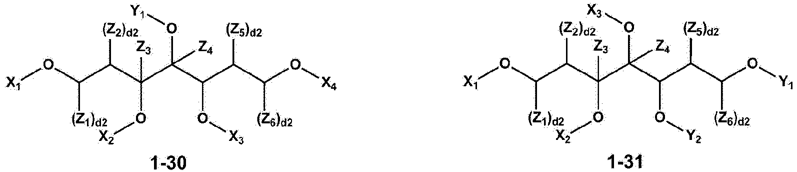 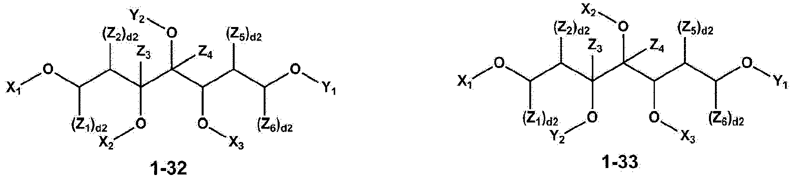 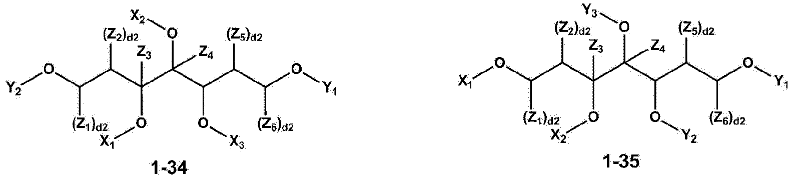 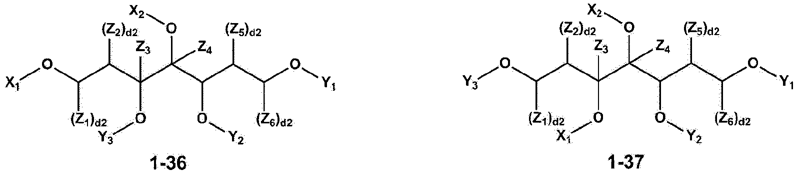 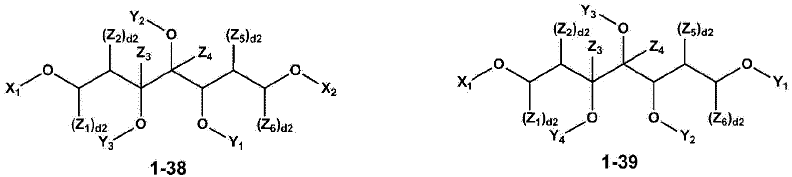 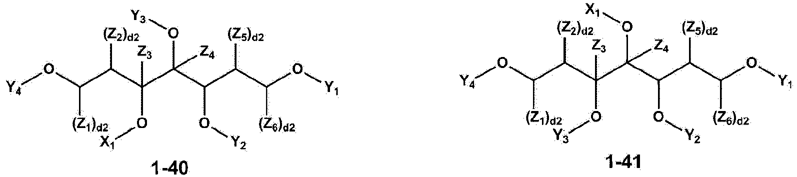 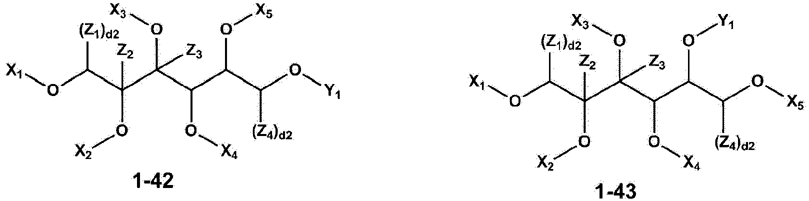 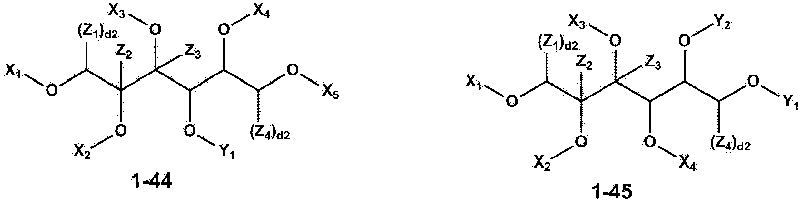 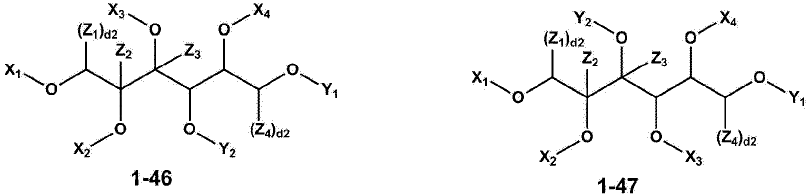 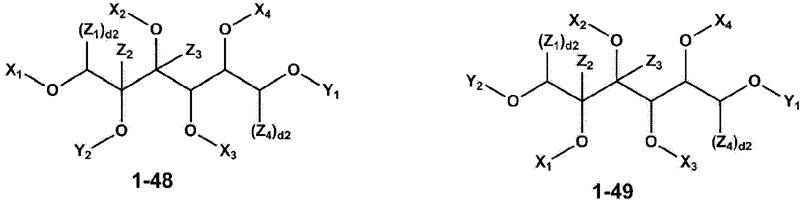 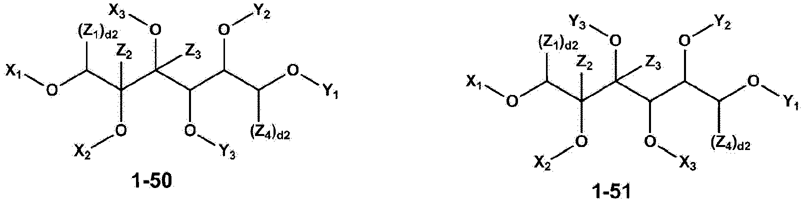 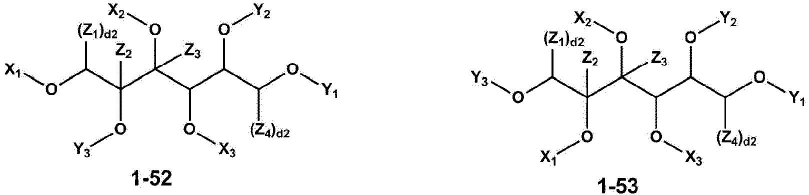 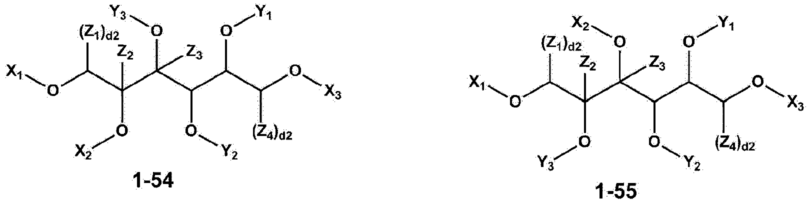 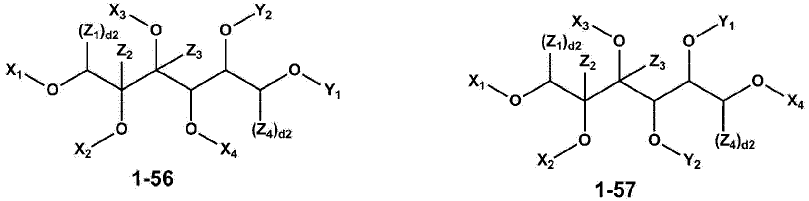 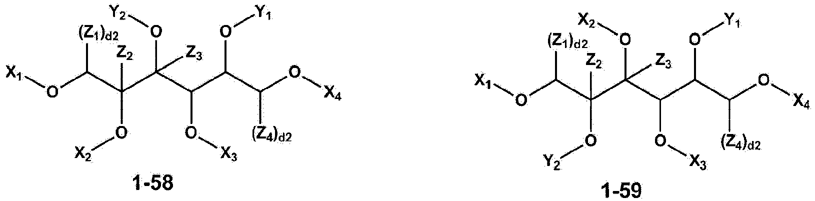 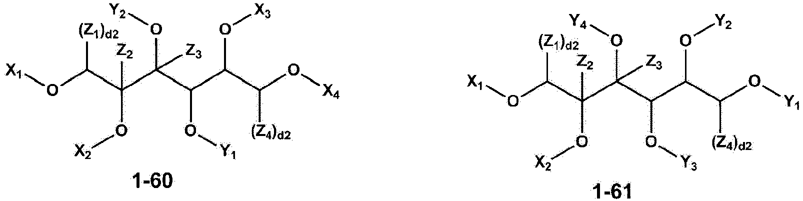 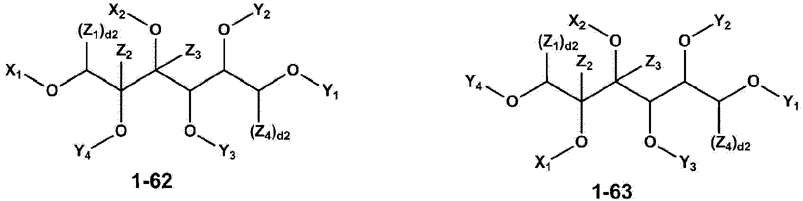 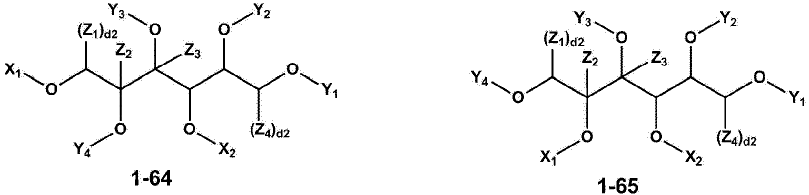 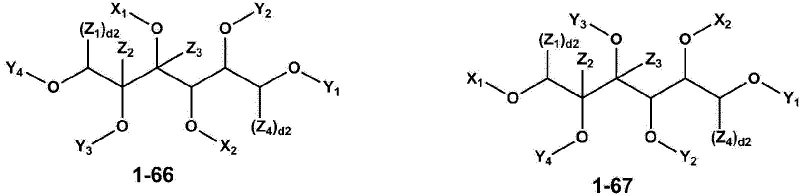 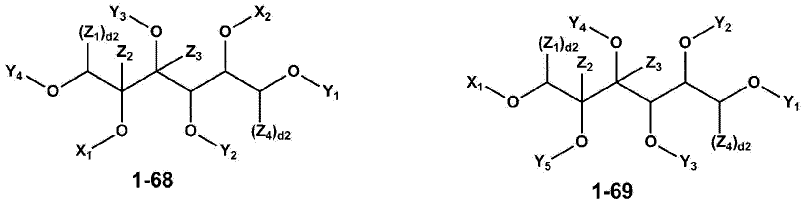 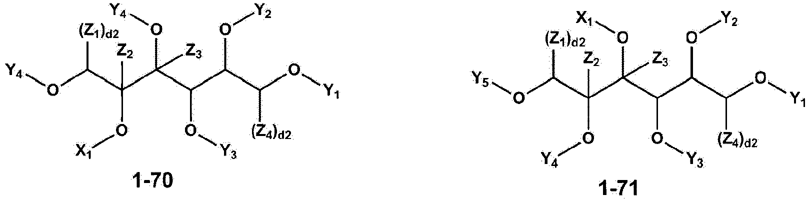 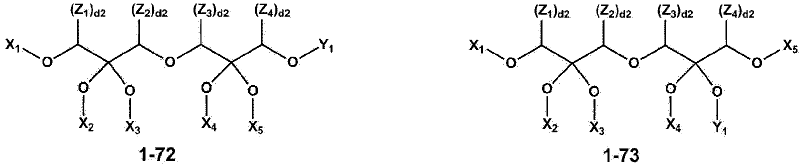 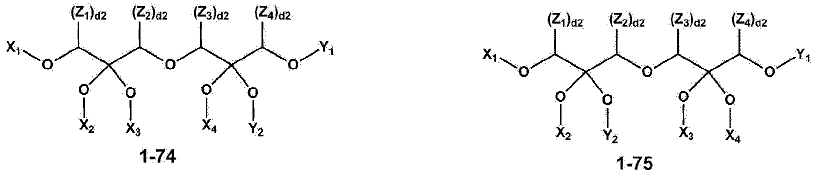 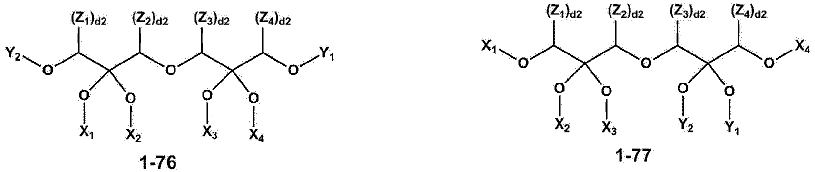 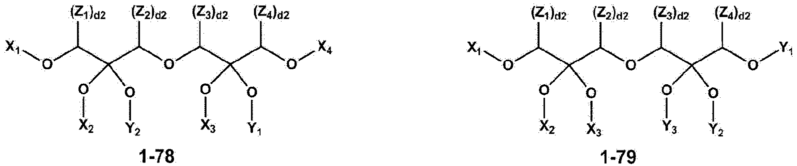 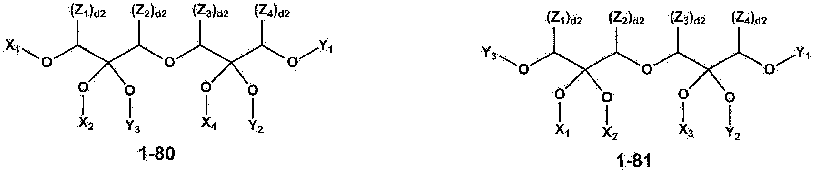 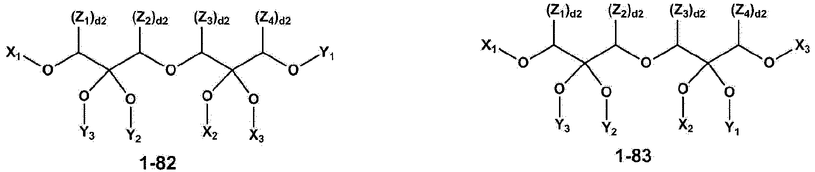 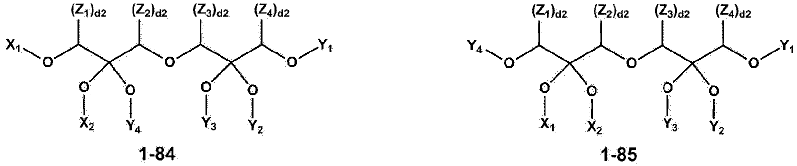 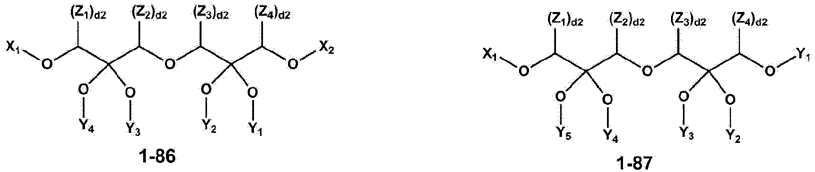 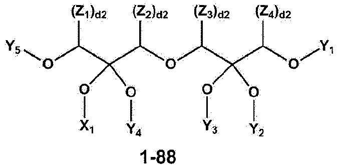 wherein, in Formulas 1-1 to 1-88,
X₁ to X₅ are groups each represented by 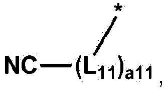 Y₁ to Y₅ are groups each represented by 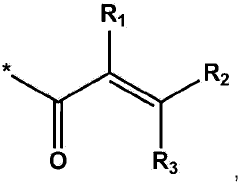
Z₁ to Z₆ are each independently selected from hydrogen, deuterium, a C₁-C₁₀ alkyl group, a C₂-C₁₀ alkenyl group, a C₂-C₁₀ alkynyl group, a cyano group, a hydroxyl group, a halogen group, a nitro group, deuterium, a C₁-C₁₀ alkyl group, a C₂-C₁₀ alkenyl group, a C₂-C₁₀ alkynyl group, a cyano group, a hydroxyl group, a halogen group, a C₁-C₁₀ alkyl group substituted with a nitro group, a C₂-C₁₀ alkenyl group substituted with a nitro group, and a C₂-C₁₀ alkynyl group substituted with a nitro group, and
d2 is an integer selected from 0 to 2.

8. The ion-conductive polymer of claim 1, wherein a content of the first monomer is 0.1 wt% to 30 wt% based on a total weight of total monomers included in the ion-conductive polymer.

9. The ion-conductive polymer of claim 1, further comprising at least one selected from a conjugated diene-based monomer, a (meth)acrylic acid ester-based monomer, a styrene-based monomer, an unsaturated carboxylic acid monomer, an acrylonitrile-based monomer, and a (meth)acrylamide-based monomer.

10. The ion-conductive polymer of claim 9, wherein:
(i) the conjugated diene-based monomer is at least one selected from 1,3-butadiene, isoprene, 2,3-dimethyl-1,3-butadiene, and 1,3-pentadiene; and/or
(ii) the (meth)acrylic acid ester-based monomer is at least one selected from methyl acrylate, ethyl acrylate, propyl acrylate, isopropyl acrylate, n-butyl acrylate, isobutyl acrylate, t-butyl acrylate, n-hexyl acrylate, 2-hexyl methacrylate, n-amyl acrylate, isoamyl acrylate, 2-ethylhexyl acrylate, and lauryl methacrylate; and/or
(iii) the styrene-based monomer is at least one selected from styrene, α-methylstyrene, β-methylstyrene, p-t-butyl styrene, and divinylbenzene; and/or
(iv) the unsaturated carboxylic acid monomer is at least one selected from acrylic acid, methacrylic acid, itaconic acid, fumaric acid, maleic acid, citraconic acid, methaconic acid, glutaconic acid, tetralidrophthalic acid, crotonic acid, and isocrotonic acid; and/or
(v) the acrylonitrile-based monomer is at least one selected from acrylonitrile and methacrylonitrile; and/or
(vi) the (meth)acrylamide-based monomer is at least one selected from acrylamide, methacrylamide, n-methylolacrylamide, and n-butoxymethylacrylamide.

11. An electrode for a lithium secondary battery, the electrode comprising: the ion-conductive polymer of any one of claims 1 to 10.

12. A lithium secondary battery comprising: a cathode; an anode; and an electrolyte interposed therebetween, wherein at least one selected from the cathode and the anode is the electrode of claim 11.

## Patentansprüche

1. Ionenleitfähiges Polymer, das ein erstes Monomer umfasst, das durch folgende Formel 1 dargestellt wird: 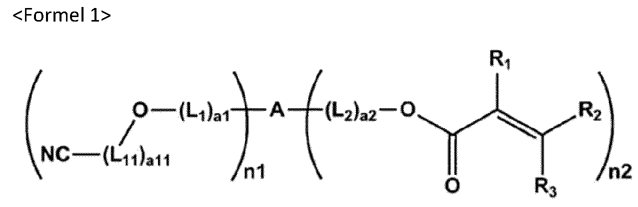 wobei in Formel 1
A eine substituierte oder unsubstituierte C₁-C₁₀ Alkylgruppe, eine substituierte oder unsubstituierte C₂-C₁₀ Alkenylgruppe oder eine substituierte oder unsubstituierte C₂-C₁₀ Alkynylgruppe darstellt,
L₁, L₂ und L₁₁ jeweils unabhängig aus einer substituierten oder unsubstituierten C₁-C₁₀ Alkylgruppe, einer substituierten oder unsubstituierten C₂-C₁₀ Alkenylgruppe und einer substituierten oder unsubstituierten C₂-C₁₀ Alkynylgruppe ausgewählt sind,
a1, a2 und a11 jeweils unabhängig eine ganze Zahl ausgewählt aus 0 bis 5 sind,
R₁ bis R₃ jeweils unabhängig aus einem Wasserstoffatom, einem Deuteriumatom, einem Halogenatom, einer substituierten oder unsubstituierten C₁-_{C10} Alkylgruppe, einer substituierten oder unsubstituierten_{C2}-_{C10} Alkenylgruppe und einer substituierten oder unsubstituierten_{C2}-_{C10} Alkynylgruppe ausgewählt sind,
n1 und n2 jeweils unabhängig eine ganze Zahl ausgewählt aus 1 bis 5 sind, und
wobei das ionenleitfähige Polymer einen Gelgehalt von 50 bis 99 % aufweist, wobei der Gelgehalt ein Prozentsatz des Gewichtsverhältnisses von unlöslicher Substanz zu einem Lösungsmittel basierend auf dem Gesamtgewicht des gesamten leitfähigen Polymers ist.

2. Ionenleitfähiges Polymer nach Anspruch 1, wobei A eine substituierte oder unsubstituierte C₁-C₅ Alkylgruppe ist.

3. Ionenleitfähiges Polymer nach Anspruch 1, wobei L₁, L₂und L₁₁ jeweils unabhängig aus einer substituierten oder unsubstituierten C₁-C₁₀ Alkylgruppe ausgewählt sind.

4. Ionenleitfähiges Polymer nach Anspruch 1, wobei L₁₁ ausgewählt ist aus: einer Ethylgruppe, einer Propylgruppe, einer Butylgruppe und einer Pentylgruppe; und einer Ethylgruppe, einer Propylgruppe, einer Butylgruppe und einer Pentylgruppe, die jeweils durch eine Methylgruppe substituiert sind.

5. Ionenleitfähiges Polymer nach Anspruch 1, wobei R₁ ein Wasserstoffatom oder eine substituierte oder unsubstituierte C₁-C₅ Alkylgruppe ist.

6. Ionenleitfähiges Polymer nach Anspruch 1, wobei R₂ und R₃ Wasserstoffatome sind.

7. Ionenleitfähiges Polymer nach Anspruch 1, wobei das erste Monomer aus den Gruppen ausgewählt ist, die durch folgende Formeln 1-1 bis 1-88 dargestellt sind: 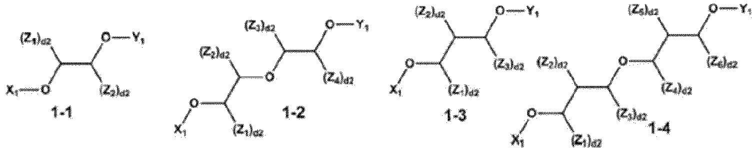 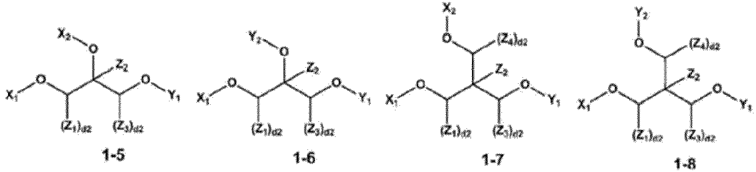 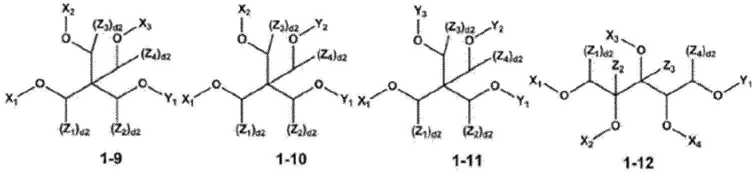 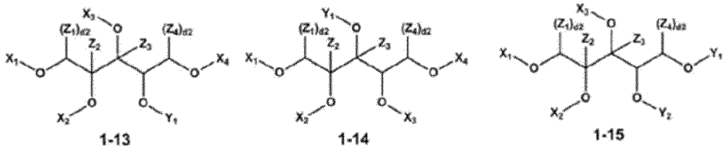 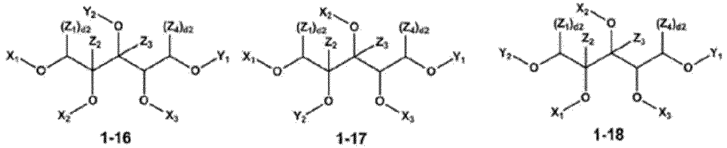 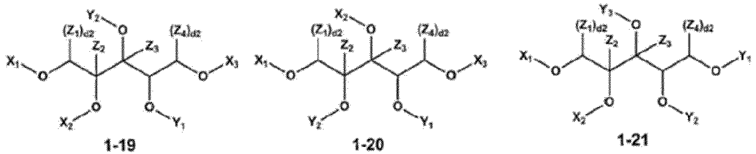 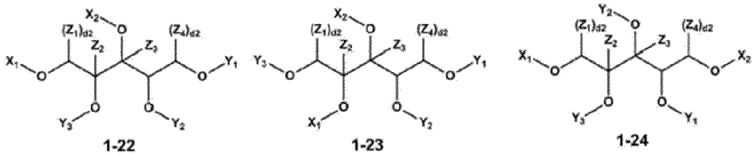 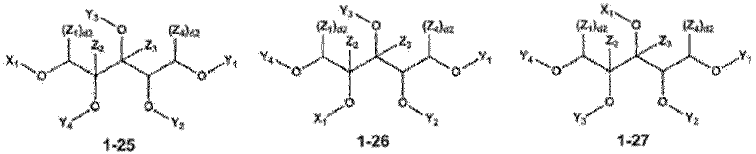 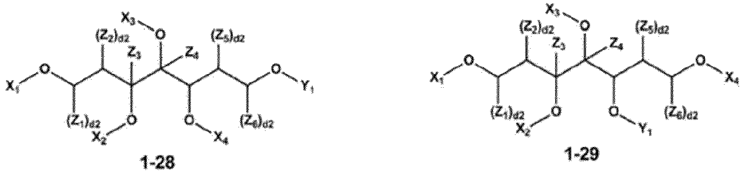 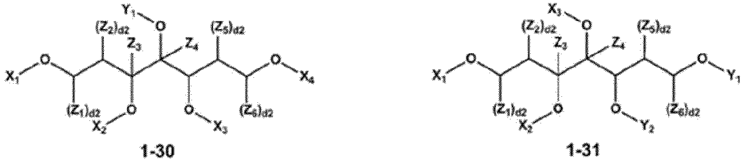 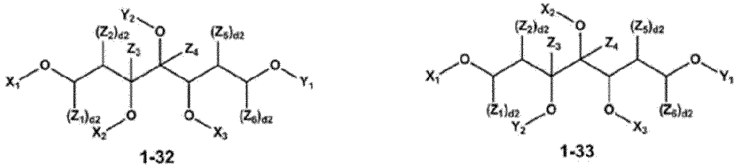 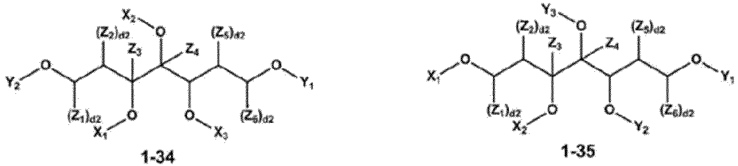 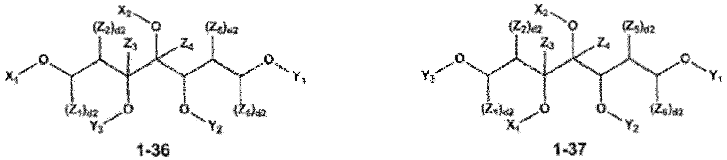 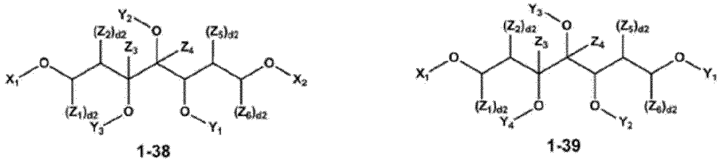 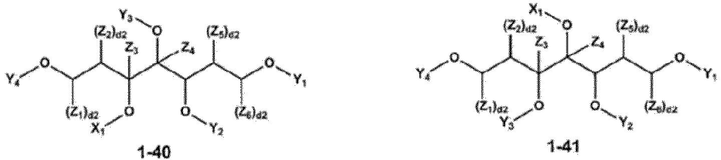 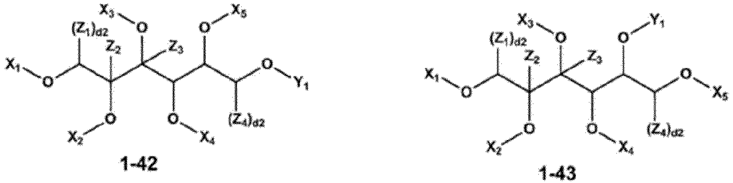 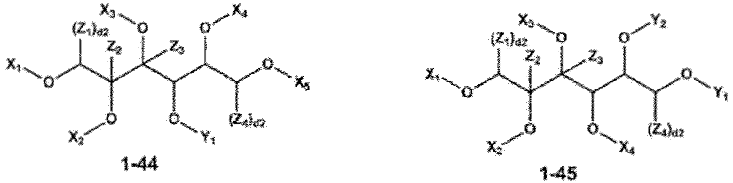 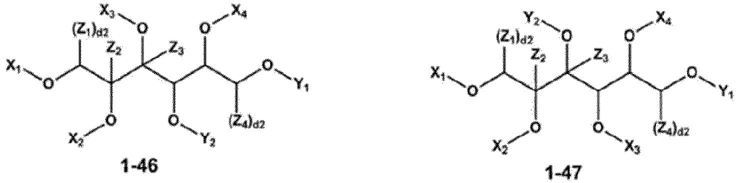 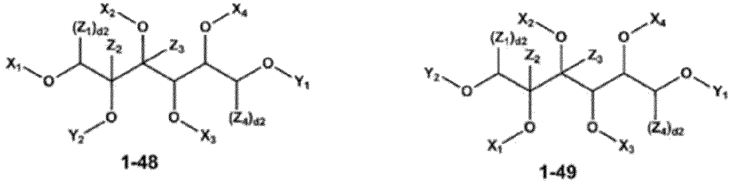 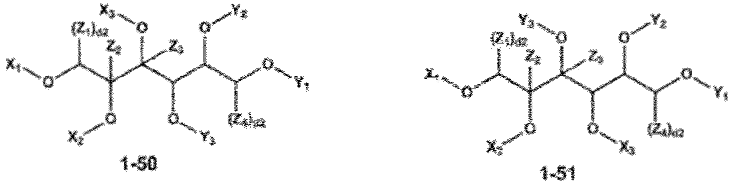 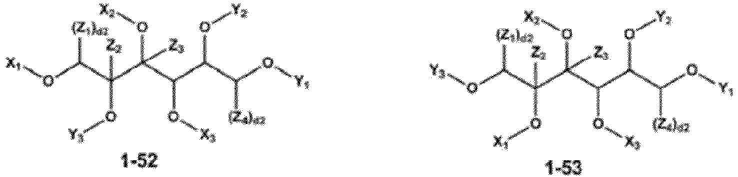 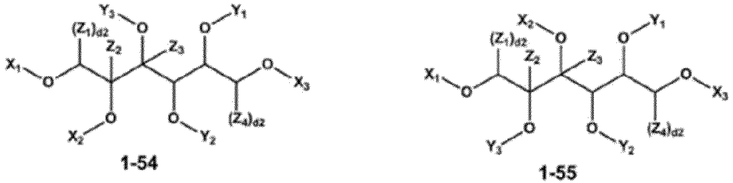 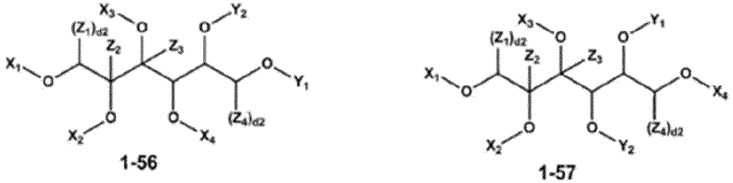 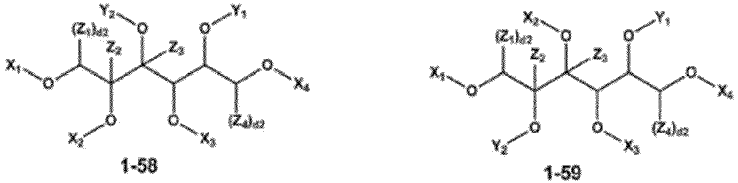 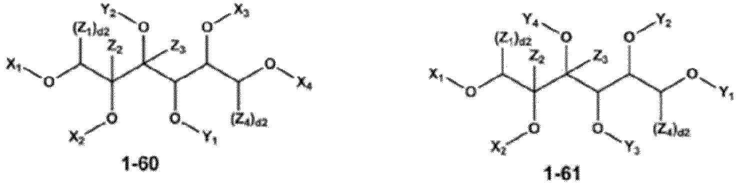 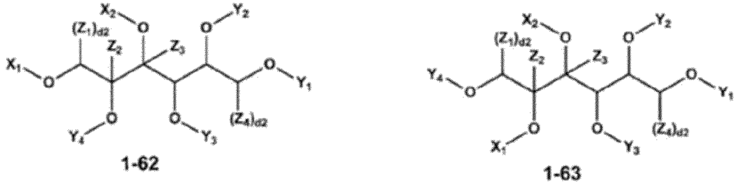 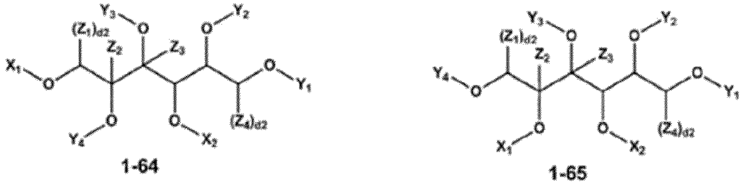 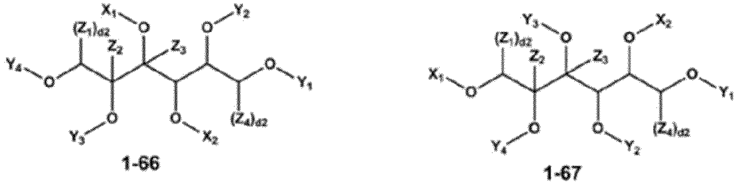 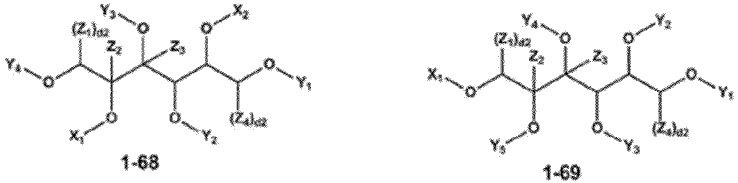 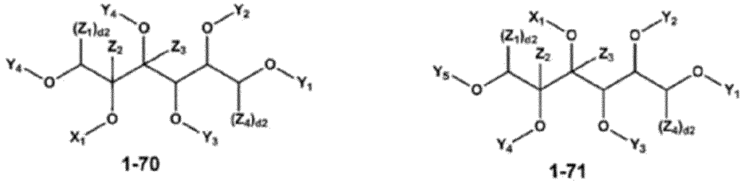 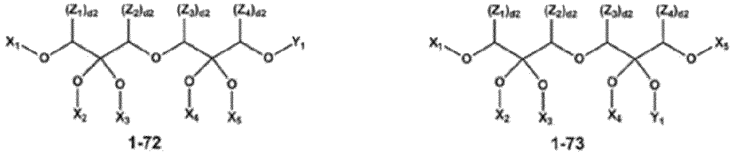 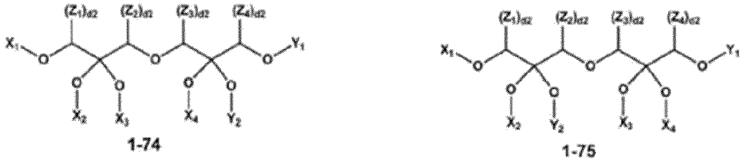 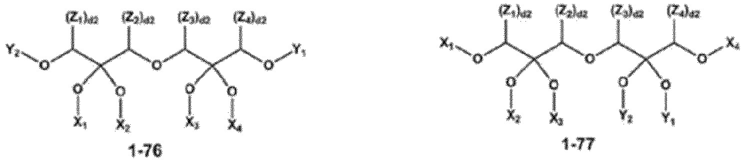 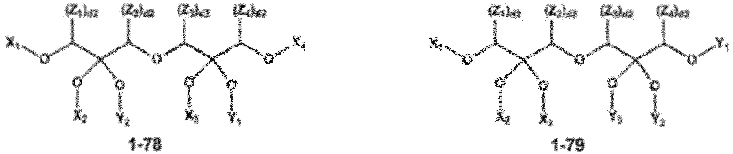 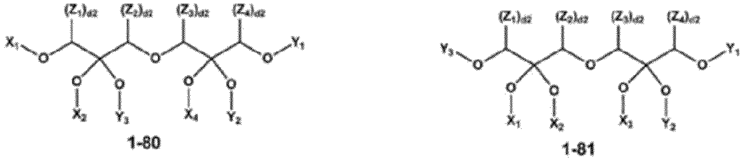 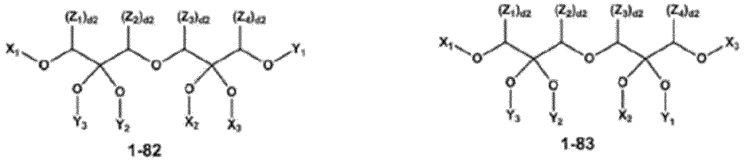 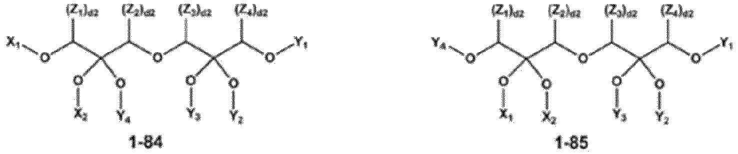 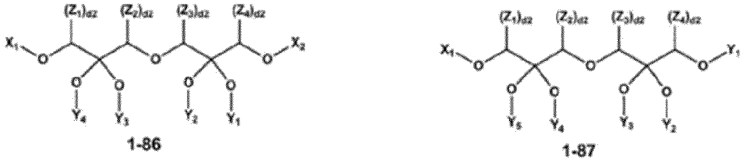 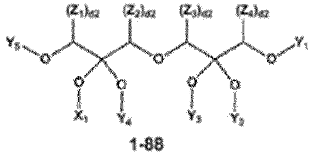 wobei in Formeln 1-1 bis 1-88
X₁ bis X₅ Gruppen sind, die jeweils durch 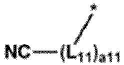 dargestellt werden, Y₁ bis Y₅ Gruppen sind,
die jeweils durch 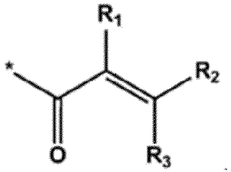 dargestellt werden,
Z₁ bis Z₆ jeweils unabhängig aus Wasserstoff, Deuterium, einer C₁-C₁₀ Alkylgruppe, einer C₂-C₁₀ Alkenylgruppe, einer C₂-C₁₀ Alkinylgruppe, einer Cyanogruppe, einer Hydroxylgruppe, einer Halogengruppe, einer Nitrogruppe, Deuterium, einer C₁-C₁₀ Alkylgruppe, einer C₂-C₁₀ Alkenylgruppe, einer C₂-C₁₀ Alkinylgruppe, einer Cyanogruppe, einer Hydroxylgruppe, einer Halogengruppe, einer mit einer Nitrogruppe substituierten C₁-C₁₀ Alkylgruppe, einer mit einer Nitrogruppe substituierten C₂-C₁₀ Alkenylgruppe und einer mit einer Nitrogruppe substituierten C₂-C₁₀ Alkinylgruppe ausgewählt sind, und
d2 eine ganze Zahl zwischen 0 und 2 ist.

8. lonenleitfähiges Polymer nach Anspruch 1, wobei ein Gehalt des ersten Monomers 0,1 Gew.-% bis 30 Gew.-% basierend auf dem Gesamtgewicht aller im ionenleitfähigen Polymer beinhalteten Monomere beträgt.

9. lonenleitfähiges Polymer nach Anspruch 1, das weiter mindestens eines umfasst, ausgewählt aus einem Monomer auf Basis eines konjugierten Diens, einem Monomer auf Basis eines (Meth)acrylsäureesters, einem Monomer auf Basis von Styrol, einem Monomer einer ungesättigten Carbonsäure, einem Monomer auf Basis von Acrylnitril und einem Monomer auf Basis von (Meth)acrylamid.

10. lonenleitfähiges Polymer nach Anspruch 9, wobei:
(i) das Monomer auf Basis eines konjugierten Diens mindestens eines ist, ausgewählt aus 1,3-Butadien, Isopren, 2,3-Dimethyl-1,3-butadien und 1,3-Pentadien; und/oder
(ii) das Monomer auf Basis von (Meth)acrylsäureester mindestens eines ist, ausgewählt aus Methylacrylat, Ethylacrylat, Propylacrylat, Isopropylacrylat, n-Butylacrylat, Isobutylacrylat, t-Butylacrylat, n-Hexylacrylat, 2-Hexylmethacrylat, n-Amylacrylat, Isoamylacrylat, 2-Ethylhexylacrylat und Laurylmethacrylat; und/oder
(iii) das Monomer auf Basis von Styrol mindestens eines ist, ausgewählt aus Styrol, α-Methylstyrol, β-Methylstyrol, pt-Butylstyrol und Divinylbenzol; und/oder
(iv) das Monomer einer ungesättigten Carbonsäure mindestens eines ist, ausgewählt aus Acrylsäure, Methacrylsäure, Itaconsäure, Fumarsäure, Maleinsäure, Citraconsäure, Methaconsäure, Glutaconsäure, Tetralidrophthalsäure, Crotonsäure und Isocrotonsäure; und/oder
(v) das Monomer auf Basis von Acrylnitril mindestens eines ist, ausgewählt aus Acrylnitril und Methacrylnitril; und/oder
(vi) das Monomer auf Basis von (Meth)acrylamid mindestens eines ist, ausgewählt aus Acrylamid, Methacrylamid, N-Methylolacrylamid und N-Butoxymethylacrylamid.

11. Elektrode für eine Lithium-Sekundärbatterie, wobei die Elektrode umfasst: das ionenleitfähige Polymer nach einem der Ansprüche 1 bis 10.

12. Lithium-Sekundärbatterie, umfassend: eine Kathode; eine Anode; und einen dazwischen angeordneten Elektrolyten, wobei mindestens eine ausgewählte der Kathode und der Anode die Elektrode nach Anspruch 11 ist.

## Revendications

1. Polymère conducteur d'ions comprenant un premier monomère représenté par la Formule 1 ci-dessous : 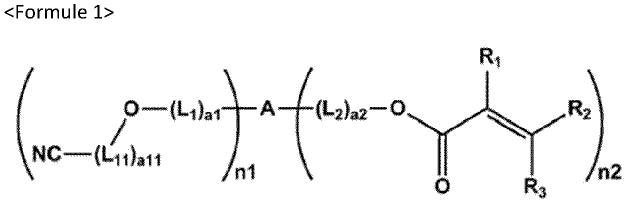 dans lequel, dans la Formule 1,
A est un groupe alkyle en C₁-C₁₀ substitué ou non substitué, un groupe alcényle en C₂-C₁₀ substitué ou non substitué ou un groupe alcynyle en C₂-C₁₀ substitué ou non substitué,
L₁, L₂ et L₁₁ sont chacun indépendamment choisis parmi un groupe alkyle en C₁-C₁₀ substitué ou non substitué, un groupe alcényle en C₂-C₁₀ substitué ou non substitué et un groupe alcynyle en C₂-C₁₀ substitué ou non substitué,
a1, a2 et a11 sont chacun indépendamment un nombre entier choisi de 0 à 5,
R₁ à R₃ sont chacun indépendamment choisis parmi un atome d'hydrogène, un atome de deutérium, un atome d'halogène, un groupe alkyle en C₁-C₁₀ substitué ou non substitué, un groupe alcényle en C₂-C₁₀ substitué ou non substitué et un groupe alcynyle en C₂-C₁₀ substitué ou non substitué,
n1 et n2 sont chacun indépendamment un nombre entier choisi de 1 à 5, et
dans lequel le polymère conducteur d'ions présente une teneur en gel de 50 à 99 %, dans lequel la teneur en gel est un pourcentage du rapport pondéral de la matière insoluble à un solvant sur la base du poids total de l'ensemble du polymère conducteur.

2. Polymère conducteur d'ions selon la revendication 1, dans lequel A est un groupe alkyle en C₁-C₅ substitué ou non substitué.

3. Polymère conducteur d'ions selon la revendication 1, dans lequel L₁, L₂ et L₁₁ sont chacun indépendamment choisis parmi un groupe alkyle en C₁-C₁₀ substitué ou non substitué.

4. Polymère conducteur d'ions selon la revendication 1, dans lequel L₁₁ est choisi parmi : un groupe éthyle, un groupe propyle, un groupe butyle et un groupe pentyle ; et un groupe éthyle, un groupe propyle, un groupe butyle et un groupe pentyle, chacun étant substitué par un groupe méthyle.

5. Polymère conducteur d'ions selon la revendication 1, dans lequel R₁ est un atome d'hydrogène ou un groupe alkyle en C₁-C₅ substitué ou non substitué.

6. Polymère conducteur d'ions selon la revendication 1, dans lequel R₂ et R₃ sont des atomes d'hydrogène.

7. Polymère conducteur d'ions selon la revendication 1, dans lequel le premier monomère est choisi parmi les groupes représentés par les Formules 1-1 à 1-88 ci-dessous : 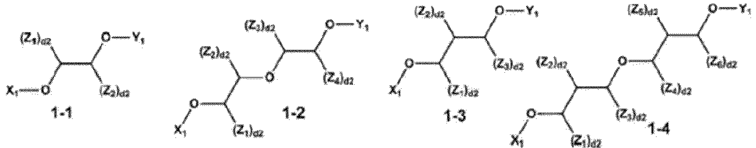 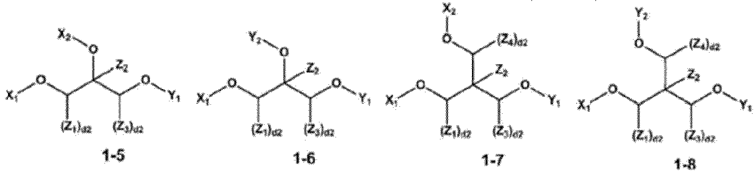 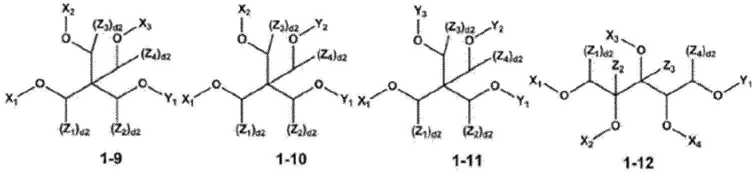 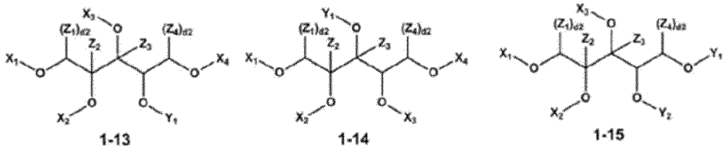 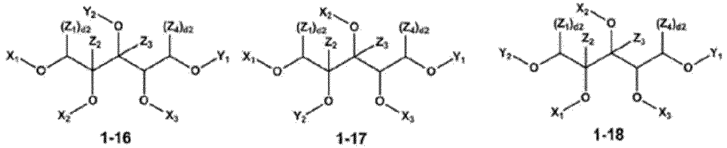 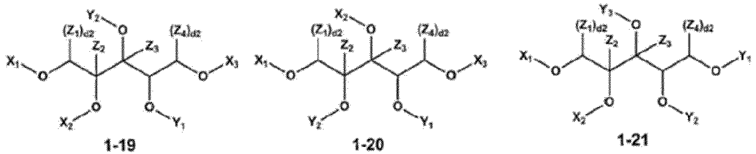 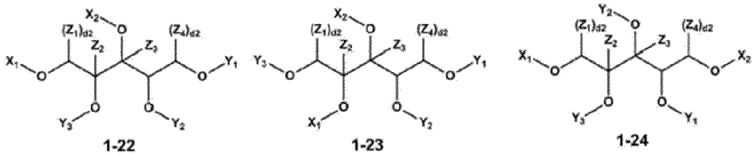 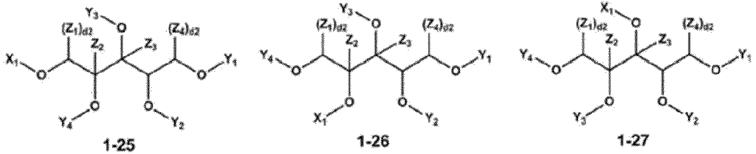 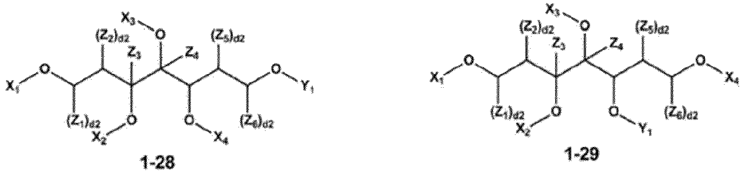 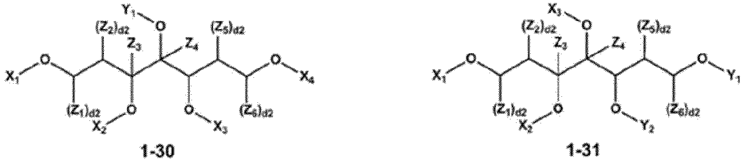 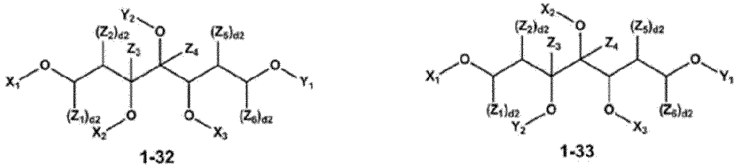 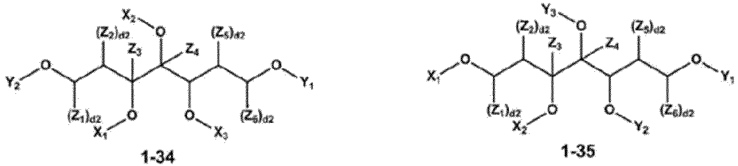 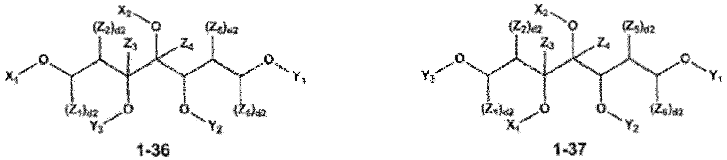 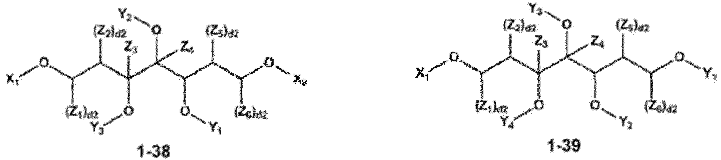 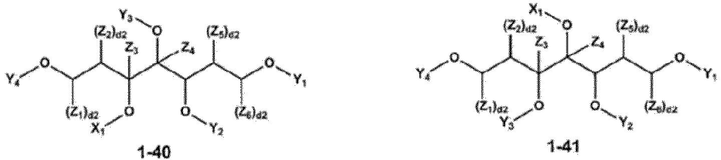 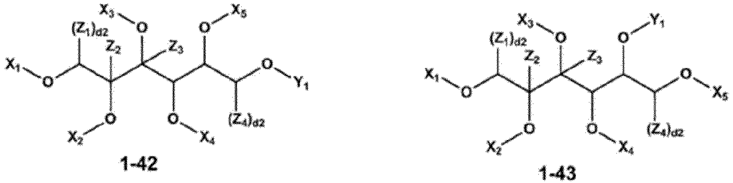 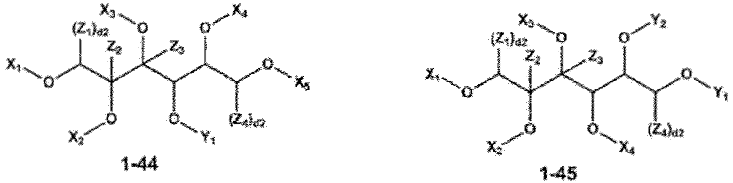 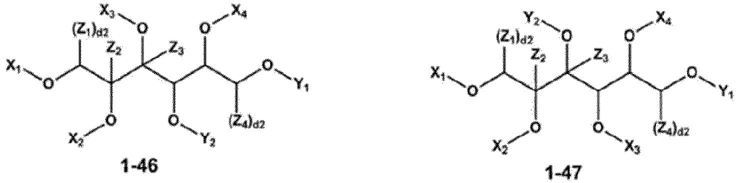 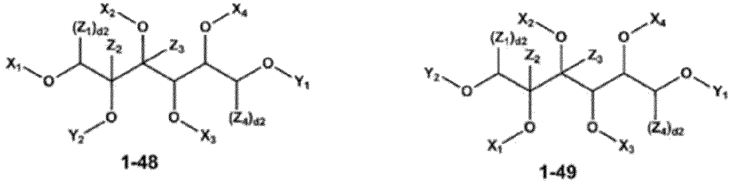 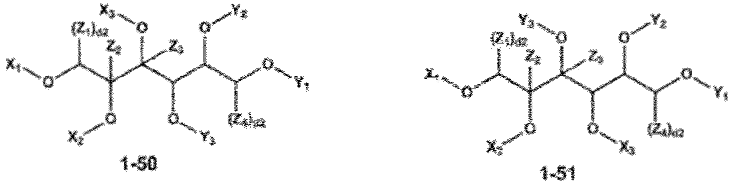 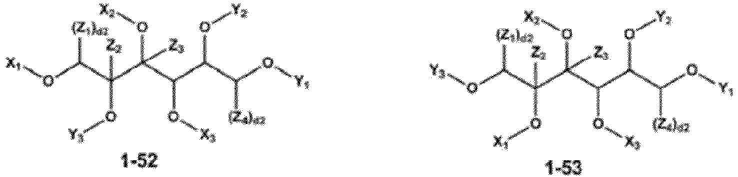 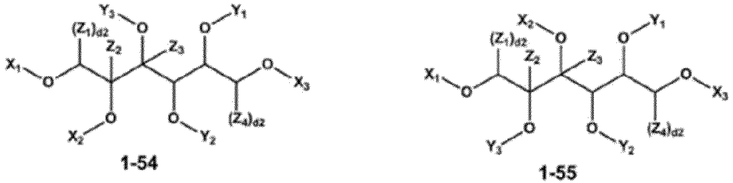 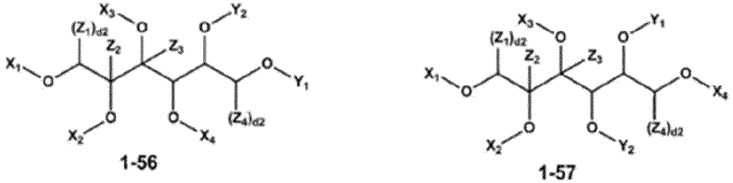 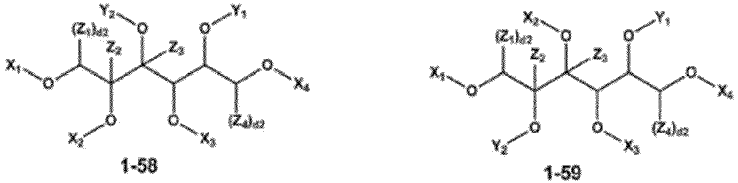 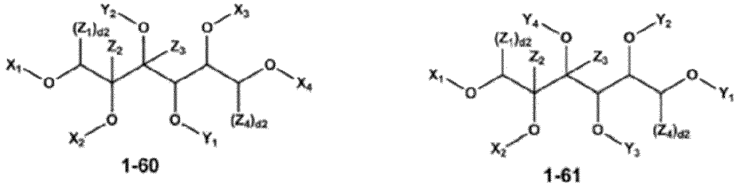 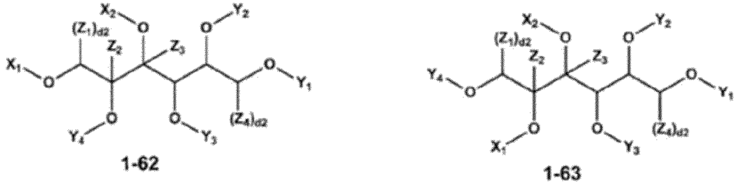 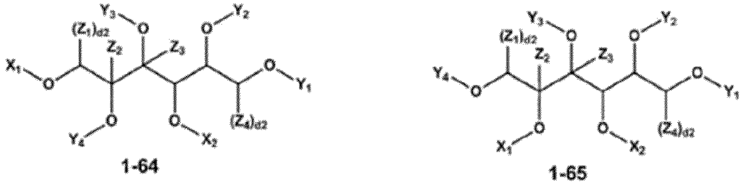 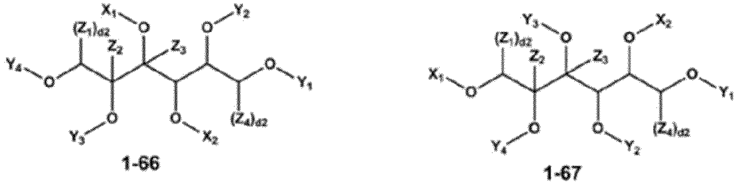 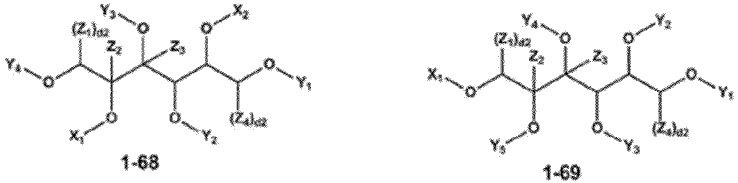 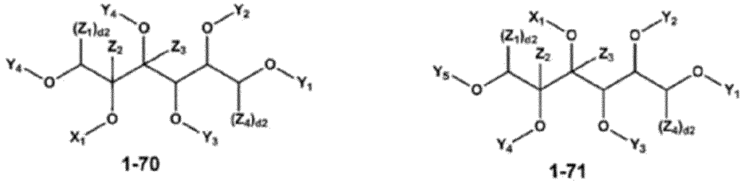 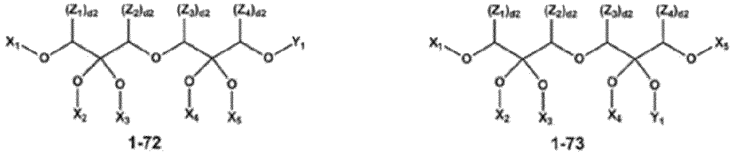 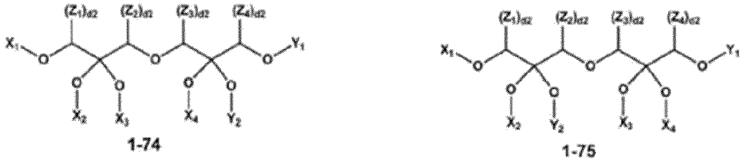 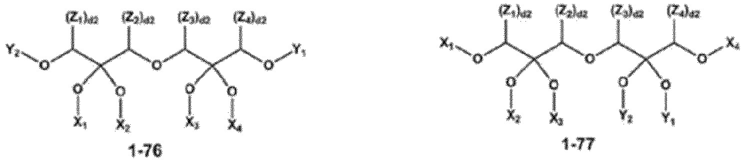 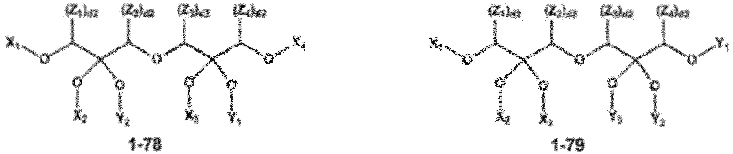 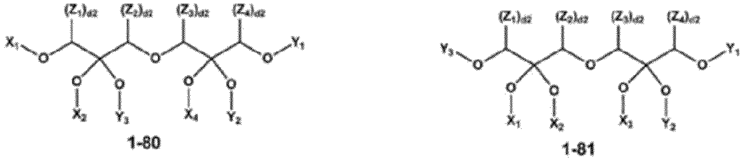 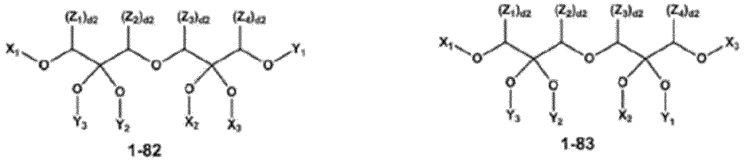 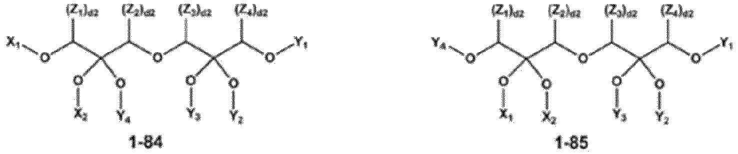 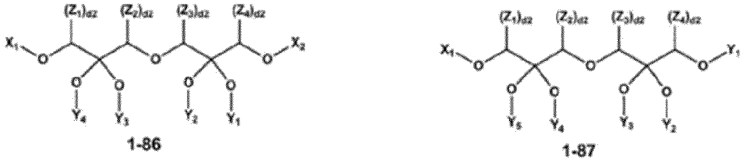 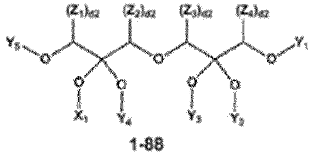 dans lequel, dans les Formules 1-1 à 1-88,
X₁ à X₅ sont des groupes chacun représentés par 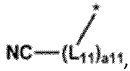 Y₁ à Y₅ sont des groupes
chacun représentés par 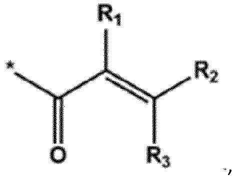
Z₁ à Z₆ sont chacun indépendamment choisis parmi un hydrogène, un deutérium, un groupe alkyle en C₁-C₁₀, un groupe alcényle en C₂-C₁₀, un groupe alcynyle en C₂-C₁₀, un groupe cyano, un groupe hydroxyle, un groupe halogène, un groupe nitro, un deutérium, un groupe alkyle en C₁-C₁₀, un groupe alcényle en C₂-C₁₀, un groupe alcynyle en C₂-C₁₀, un groupe cyano, un groupe hydroxyle, un groupe halogène, un groupe alkyle en C₁-C₁₀ substitué par un groupe nitro, un groupe alcényle en C₂-C₁₀ substitué par un groupe nitro, et un groupe alcynyle en C₂-C₁₀ substitué par un groupe nitro, et
d2 est un nombre entier choisi de 0 à 2.

8. Polymère conducteur d'ions selon la revendication 1, dans lequel la teneur en premier monomère est de 0,1 % en poids à 30 % en poids sur la base d'un poids total des monomères totaux inclus dans le polymère conducteur d'ions.

9. Polymère conducteur d'ions selon la revendication 1, comprenant en outre au moins un élément choisi parmi un monomère à base de diène conjugué, un monomère à base d'ester d'acide (méth)acrylique, un monomère à base de styrène, un monomère d'acide carboxylique insaturé, un monomère à base d'acrylonitrile et un monomère à base de (méth)acrylamide.

10. Polymère conducteur d'ions selon la revendication 9, dans lequel :
(i) le monomère à base de diène conjugué est au moins l'un choisi parmi le 1,3-butadiène, l'isoprène, le 2,3-diméthyl-1,3-butadiène et le 1,3-pentadiène ; et/ou
(ii) le monomère à base d'ester d'acide (méth)acrylique est au moins l'un choisi parmi l'acrylate de méthyle, l'acrylate d'éthyle, l'acrylate de propyle, l'acrylate d'isopropyle, l'acrylate de n-butyle, l'acrylate d'isobutyle, l'acrylate de t-butyle, l'acrylate de n-hexyle, le méthacrylate de 2-hexyle, l'acrylate de n-amyle, l'acrylate d'isoamyle, l'acrylate de 2-éthylhexyle et le méthacrylate de lauryle ; et/ou
(iii) le monomère à base de styrène est au moins l'un choisi parmi le styrène, l'α-méthylstyrène, le β-méthylstyrène, le p-t-butylstyrène et le divinylbenzène ; et/ou
(iv) le monomère d'acide carboxylique insaturé est au moins l'un choisi parmi l'acide acrylique, l'acide méthacrylique, l'acide itaconique, l'acide fumarique, l'acide maléique, l'acide citraconique, l'acide méthaconique, l'acide glutaconique, l'acide tétralidrophtalique, l'acide crotonique et l'acide isocrotonique ; et/ou
(v) le monomère à base d'acrylonitrile est au moins l'un choisi parmi l'acrylonitrile et le méthacrylonitrile ; et/ou
(vi) le monomère à base de (méth)acrylamide est au moins l'un choisi parmi l'acrylamide, le méthacrylamide, le n-méthylolacrylamide et le n-butoxyméthylacrylamide.

11. Électrode pour une batterie secondaire au lithium, l'électrode comprenant : le polymère conducteur d'ions selon l'une quelconque des revendications 1 à 10.

12. Batterie secondaire au lithium comprenant : une cathode ; une anode ; et un électrolyte interposé entre celles-ci, dans laquelle au moins l'une choisie parmi la cathode et l'anode est l'électrode selon la revendication 11.
